# EUROPEAN PATENT SPECIFICATION

(11) **EP 3 933 577 B1**
(45) Date of publication and mention of the grant of the patent: **09.04.2025**
(21) Application number: 20790576.1
(22) Date of filing: 25.02.2020
(51) Int. Cl.: G06F 9/451, G06F 1/16, G06F 1/3215, G06F 3/04883, G06F 1/3234, G06F 1/3287, G06F 3/0482, G06F 3/04842, G06F 3/04847, H04M 1/02, G06F 3/04886

(54) **DISPLAY CONTROL METHOD AND RELATED APPARATUS**
ANZEIGESTEUERUNGSVERFAHREN UND ZUGEHÖRIGE VORRICHTUNG
PROCÉDÉ DE COMMANDE D'AFFICHAGE ET APPAREIL ASSOCIÉ

(30) Priority: 16.04.2019 CN 201910304644
(43) Date of publication of application: 05.01.2022
(73) Proprietor: Huawei Technologies Co., Ltd., Shenzhen, Guangdong 518129 (CN)
(72) Inventor: ZHANG, Xiufeng, Shenzhen, Guangdong 518129 (CN)
(74) Representative: Epping - Hermann - Fischer
(86) International application number: PCT/CN2020/076582
(87) International publication number: WO 2020/211532

(56) References cited:
- EP-A1- 3 159 784
- CN-A- 107 765 968
- CN-A- 107 765 971
- CN-A- 107 765 971
- CN-A- 108 196 810
- CN-A- 109 613 958
- CN-A- 110 119 295
- KR-A- 20190 010 702

## Description

### TECHNICAL FIELD

This application relates to the field of electronic technologies, and in particular, to a display control method and a related electronic device, computer storage medium, and computer program product.

### BACKGROUND

With rapid development of digital technologies, intelligent electronic devices are indispensable in people's lives. Because application functions of the intelligent electronic devices are increasingly extensive, people's requirements on screen sizes of the intelligent electronic devices change as use scenarios change.

Currently, an intelligent electronic device is configured with a flexible display, that is, a foldable display. The flexible display attracts much attention due to unique features and great potential. Compared with a conventional display, the flexible display has features of strong flexibility and bendability, and can provide a user with a new bendability-based interaction mode to meet more requirements of the user for an electronic device. For an electronic device configured with a foldable display, the foldable display on the electronic device may be switched between a small screen in a folded form and a large screen in an unfolded form at any time. In the folded form, the foldable display may be divided into three display areas: a primary display, a secondary display, and a side display. When the foldable display is switched from the unfolded form to the folded form, the foldable display changes a layout of display elements in the unfolded form and displays the display elements on the primary display in the folded form. Consequently, the display area of the display is not fully utilized.

Document CN 107 765 971 A discloses a user interface display method and equipment, and belongs to the field of human-computer interaction. The method comprises the following steps: monitoring the working state of a folded display screen; when the working state is switched into an outward folding state from an opening state, determining a visible screen area and an off screen area in two screen areas; controlling the visible screen area to be under a display state; and controlling the off screen area to be under an off state. By use of the method, when the working state of the folded display screen is the outward folding state, the visible screen area and the off screen area in two screen areas of the folded display screen are determined, the off screen area is controlled to be under the off screen state, electric quantity consumption is saved, the off screen area can prevented from being touched by a user by mistake, and the use convenience of the terminal with the folded display screen is improved.

Document CN 107 765 968 A discloses a task switching method and device, a terminal and a computer readable storage medium, and belongs to the technical field of terminals. The method and the device are applied to the terminal; the terminal comprises a foldable display screen; and after the display screen is folded, two display areas and a curved surface area between the two display areas can be formed. The method comprises the following steps of: when at least one task is operated at the background of the terminal in a process that display screen is located in a folding state, displaying a task identifier of the at least task in the curved surface area; detecting touch operations in the curved surface area; and when a touch operation for a target task identifier is detected, switching a target task to the foreground of the target display area to be displayed, wherein the target task is any task in the at least one task, and the target display area is an area for displaying the foreground task in the two display areas. According to the method, task identifiers of the background tasks are displayed in the curved surface area, so that task switching can be carried out through the touch operationsof the task identifiers, and then the task switching step is simplified.

Document EP 3 159 784 A1 provides an electronic device that comprises a bended display, a sensor unit, and a processor. The bended display includes a front display region, a side display region, and a back display region, which respectively correspond to a front face, a side face, and a back face of the electronic device. The sensor unit detects a motion of the electronic device. If an event occurs while content is displayed on the front display region, the processor controls the bended display to display a graphic object corresponding to the event on the front display region, and also controls the bended display to display a first screen corresponding to the graphic object on the back display region, based on the detected motion of the electronic device.

### SUMMARY

This application provides a display control method and a related electronic device, computer storage medium, and computer program product, to display a beautified layer with a pattern on a side display of a foldable display. This fully utilizes a display area of the foldable display, and improves visual experience of a user. The present invention is defined by the attached independent claims; dependent claims define preferred embodiments.

According to a first aspect, this application provides a display control method, applied to an electronic device configured with a foldable display. The method includes: First, the electronic device displays a first interface in full screen by using the foldable display. Then, the electronic device receives a first folding operation for the foldable display. A display area of the foldable display is divided into a primary display, a secondary display, and a side display. In response to the first folding operation, the electronic device displays a second interface on the primary display or the secondary display of the foldable display, and displays a beautified layer on the side display of the foldable display. A pattern is displayed at the beautified layer, and interface content of the second interface is the same as interface content of the first interface.

In this application, when the foldable display is in an unfolded state, the electronic device may display an interface (for example, a home screen or an application interface) on the foldable display in full screen. When the foldable display is switched from the unfolded state to a folded state, the electronic device may display, by scaling down the interface on the primary display or the secondary display, the interface that is displayed in full screen when the foldable display is in the unfolded state, or display, on both the primary display and the secondary display, interface content whose interface is scaled down. In addition, the electronic device displays the beautified layer on the side display of the foldable display, and the beautified layer may display the pattern (for example, a spine pattern). Because the beautified layer with the pattern (for example, a spine-type pattern) is displayed on the side display, visual experience of a user is increased.

In a possible implementation, the method further includes: The electronic device receives a first input operation for the beautified layer on the side display. In response to the first input operation, the electronic device switches between patterns displayed at the beautified layer. In this way, the user can conveniently change the pattern at the beautified layer on the side display. This improves user experience.

In a possible implementation, the method further includes: The electronic device receives a second input operation for the beautified layer on the side display. In response to the second input operation, the electronic device cancels displaying the beautified layer on the side display. In this way, the electronic device can receive a user input based on a user requirement, and cancel displaying the beautified layer on the side display of the foldable display. This improves user experience.

In a possible implementation, after the electronic device cancels displaying the beautified layer on the side display, the method further includes: The electronic device receives a third input operation for the side display. In response to the third input operation, the electronic device displays the beautified layer on the side display. In this way, after the electronic device cancels displaying the beautified layer on the side display, the electronic device can receive a user input based on a user requirement, and display the beautified layer on the side display again. This improves user experience.

The method further includes: The electronic device receives a second unfolding operation for the foldable display. In response to the second unfolding operation, the electronic device extends, within a second time period, the second interface to the first interface that is displayed on the foldable display in full screen, and the electronic device slides, within the first time period, the beautified layer out of the display area of the foldable display along a direction perpendicular to a direction in which the second interface is extended. In this way, progressive exit of the beautified layer displayed in the bent area can be implemented, and continuous change of the application interface from primary-display display to full-screen display can be implemented. This avoids bringing a skipping visual sense to the user when the application interface is extended to the full screen, and improves visual experience of the user.

In a possible implementation, that the electronic device displays a second interface on the primary display or the secondary display of the foldable display includes: The electronic device determines whether the primary display of the foldable display faces upward relative to a horizontal plane. If the primary display of the foldable display faces upward relative to a horizontal plane, the electronic device displays the second interface on the primary display of the foldable display. If the primary display of the foldable display does not face upward relative to a horizontal plane, the electronic device displays the second interface on the secondary display of the foldable display. In this way, when the foldable display is switched from the unfolded form to the folded form, the user can view interface content output by a display system of the electronic device in the first time.

According to a second aspect, this application provides an electronic device, including one or more memories, a foldable display, and one or more memories. The one or more memories are coupled to the one or more processors, and the foldable display communicates with the one or more processors. The one or more memories are configured to store computer program code, the computer program code includes computer instructions, and when the one or more processors execute the computer instructions, the electronic device is enabled to perform the display control method in any possible implementations of the foregoing aspect.

According to a third aspect, an embodiment of this application provides a computer storage medium, including computer instructions. When the computer instructions are run on an electronic device, the electronic device is enabled to perform the display control method in any possible implementations of the foregoing aspect.

According to a fourth aspect, an embodiment of this application provides a computer program product. When the computer program product runs on a computer, the computer is enabled to perform the display control method in any possible implementations of the foregoing aspect.

### BRIEF DESCRIPTION OF DRAWINGS

FIG. 1 is a schematic diagram of a structure of an electronic device according to an embodiment of this application;
FIG. 2A to FIG. 2C are schematic diagrams of forms of a group of foldable displays according to an embodiment of this application;
FIG. 3 and FIG. 4 are schematic diagrams of a group of interfaces according to an embodiment of this application;
FIG. 5A and FIG. 5B are schematic diagrams of interfaces of a group of foldable displays displayed in a folded form according to an embodiment of this application;
FIG. 6A to FIG. 6C are schematic diagrams of another group of interfaces according to an embodiment of this application not covered by the claims but useful for understanding the invention;
FIG. 7A to FIG. 7C are schematic diagrams of another group of interfaces according to an embodiment of this application as claimed;
FIG. 8A to FIG. 8G are schematic diagrams of another group of interfaces according to an embodiment of this application;
FIG. 9A to FIG. 9D are schematic diagrams of another group of interfaces according to an embodiment of this application;
FIG. 10 is a schematic flowchart of a display control method according to an embodiment of this application;
FIG. 11A to FIG. 11C are schematic diagrams of interfaces of another group of foldable displays displayed in a folded form according to an embodiment of this application; and
FIG. 12 is a schematic flowchart of another display control method according to an embodiment of this application.

### DESCRIPTION OF EMBODIMENTS

The following clearly describes technical solutions in embodiments of this application in detail with reference to the accompanying drawings. In descriptions of the embodiments of this application, unless otherwise specified, "/" indicates "or". For example, A/B may indicate A or B. The term "and/or" in this specification merely describes an association relationship of associated objects, and indicates that three relationships may exist. For example, A and/or B may indicate the following three cases: Only A exists, both A and B exist, and only B exists. In addition, in the descriptions of the embodiments of this application, "a plurality of" means two or more.

In the following, terms "first" and "second" are merely intended for description, and shall not be understood as an indication or implication of relative importance or implicit indication of a quantity of indicated technical features.

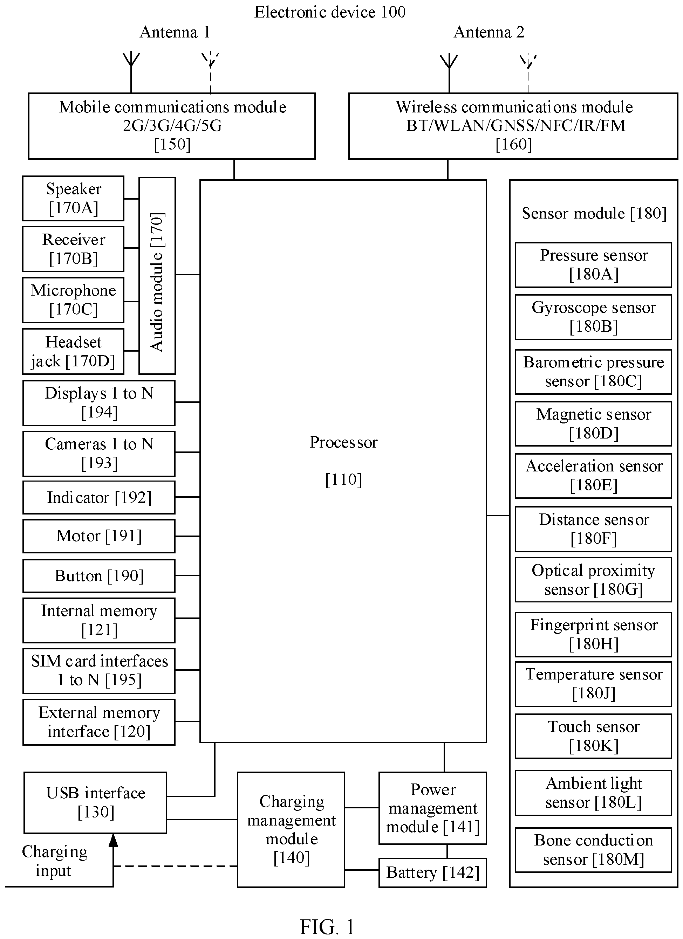

Therefore, a feature limited by "first" or "second" may explicitly or implicitly include one or more of the features. In the descriptions of the embodiments of this application, unless otherwise specified, "a plurality of" means two or more. FIG. 1 is a schematic diagram of a structure of an electronic device 100.

The following uses the electronic device 100 as an example to specifically describe this embodiment. It should be understood that the electronic device 100 shown in FIG. 1 is merely an example, and the electronic device 100 may have more or fewer components than those shown in FIG. 1, or may combine two or more components, or may have different component configurations. Various components shown in the figure may be implemented in hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (Neural-network Processing Unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a high-speed cache memory. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110. Therefore, system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call by using the Bluetooth headset. Both the I2S interface and the PCM interface may be configured to perform audio communication.

The UART interface is a universal serial data bus, and is configured to perform asynchronous communication. The bus may be a two-way communications bus, and converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music by using the Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to the charger to charge the electronic device 100, and may also be configured to transmit data between the electronic device 100 and a peripheral device. The USB interface 130 may alternatively be configured to connect to a headset, to play audio through the headset. Alternatively, the interface may be configured to connect to another electronic device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from an interface connection manner in this embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communications module 150 may provide a solution, applied to the electronic device 100, to wireless communication including 2G, 3G, 4G, 5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and disposed in a same device with the mobile communications module 150 or another function module.

The wireless communications module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module. The wireless communications module 160 receives an electromagnetic wave through the antenna 2, performs frequency modulation and filtering on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

In some embodiments of this application, when the display panel is made of a material such as an OLED, an AMOLED, or an FLED, the display 194 in FIG. 1 may be bent. Herein, that the display 194 may be bent means that the display may be bent to any angle at any part and may be maintained at the angle. For example, the display 194 may be folded left and right from the middle, or may be folded up and down from the middle. In this embodiment of this application, the display that may be bent is referred to as a foldable display. The foldable display may be one screen, or may be a display formed by combining a plurality of screens. This is not limited herein.

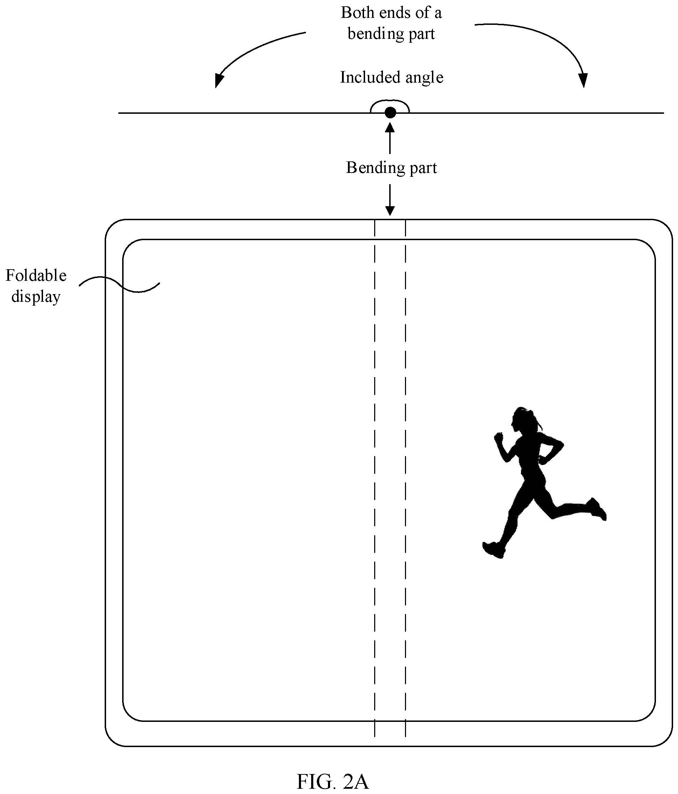

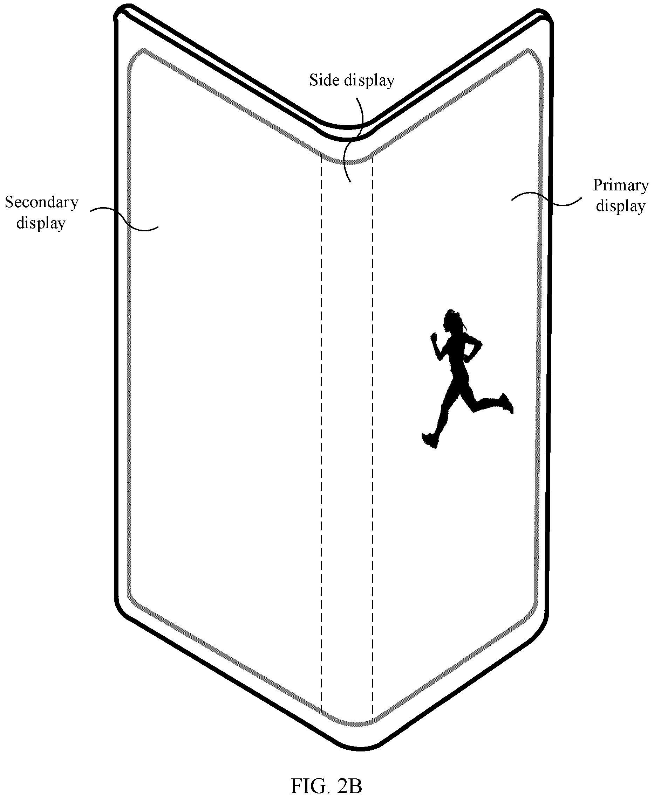

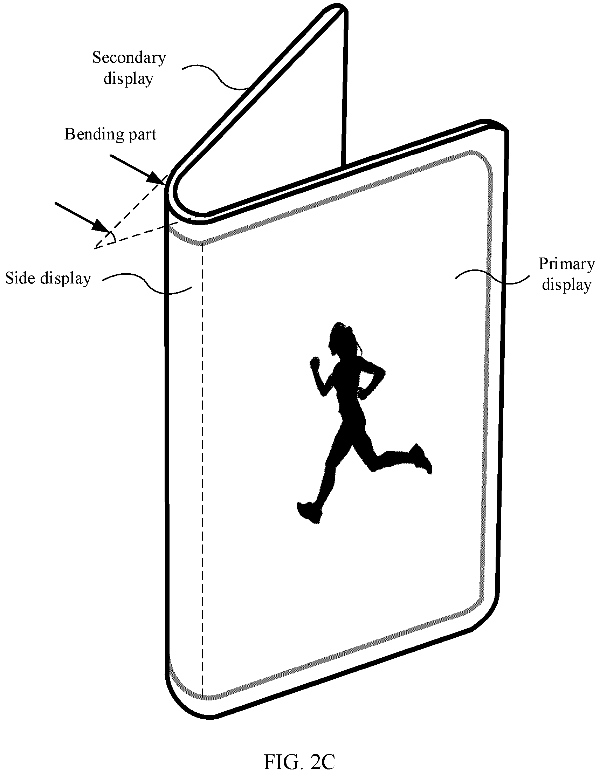

For example, refer to FIG. 2A, FIG. 2B, and FIG. 2C. The foldable display may include at least two physical forms: an unfolded form and a folded form. As shown in FIG. 2A, the foldable display is in the unfolded form, to be specific, an included angle between left and right ends of a middle bending part of the foldable display from which the foldable display is folded leftward or rightward (or between upper and lower ends of a middle bending part of the foldable display if the foldable display is folded upward or downward) ranges from a first angle to 180 degrees. The first angle is greater than 0 degrees and less than 180 degrees. For example, the first angle may be 90 degrees. As shown in FIG. 2B and FIG. 2C, the foldable display may alternatively be in the folded form, to be specific, the included angle between the left and right ends of the middle bending part of the foldable display (or between the upper and lower ends of the middle bending part of the foldable display if the foldable display is folded upward or downward) ranges from 0 degrees to the first angle. In this embodiment of this application, a display area of the foldable display that goes into the folded form may be divided into a primary display, a secondary display, and a side display. In the unfolded form, the foldable display may be folded in a direction in which the primary display and the secondary display face each other, or may be folded in a direction in which the primary display and the secondary display are opposite to each other. In some embodiments, the included angle between the left and right ends of the middle bending part of the foldable display (or between the upper and lower ends of the middle bending part of the foldable display if the foldable display is folded upward or downward) may range from 0 degrees to +180 degrees. For example, the foldable display may be folded at an included angle of 30 degrees in a direction in which the primary display faces the secondary display, or may be folded at an included angle of 30 degrees in a direction in which the primary display is opposite to the secondary display.

In some embodiments, the electronic device 100 may determine, by using one or more of a gravity sensor, an acceleration sensor, and a gyroscope, whether the foldable display is in the folded form or in the unfolded form. The electronic device 100 may further detect, by using the gravity sensor, the acceleration sensor, and the gyroscope, an included bending angle of the foldable display, and then the electronic device 100 may determine, based on the included bending angle, whether the foldable display is in the folded form or in the unfolded form. The electronic device 100 may further determine, by using the one or more of the gravity sensor, the acceleration sensor, and the gyroscope, an orientation of the foldable display in the folded form, and further determine a display area of interface content output by a display system. For example, when the primary display of the foldable display faces upward relative to the ground, the electronic device 100 may display, on the primary display, the interface content output by the display system. When the secondary display of the foldable display faces upward relative to the ground, the electronic device 100 may display, on the secondary display, the interface content output by the display system.

In some embodiments, the electronic device 100 may further include an angular transducer (not shown in FIG. 1). The angular transducer may be disposed at the bending part of the foldable display. The electronic device 100 may measure, by using the angular transducer (not shown in FIG. 1) disposed at the bending part of the foldable display, an included angle between both ends of the middle bending part of the foldable display. When the included angle is greater than or equal to the first angle, the electronic device 100 may identify, by using the angular transducer, that the foldable display goes into the unfolded state. When the included angle is less than or equal to the first angle, the electronic device 100 may identify, by using the angular transducer, that the foldable display goes into the folded form.

In some other embodiments, the electronic device 100 may also identify, by using a physical switch disposed at the bending part of the foldable display, whether the foldable display is in the folded form. For example, when the electronic device receives a folding operation performed by a user on the foldable display, the physical switch disposed on the electronic device is triggered to be turned on, and the electronic device 100 may determine that the foldable display is in the folded form. When the electronic device 100 receives an unfolding operation performed by the user on the foldable display, the physical switch disposed on the electronic device is triggered to be turned off, and the electronic device may determine that the foldable display is in the unfolded form. The foregoing examples are merely used to explain this application, and shall not constitute a limitation.

When the foldable display is in the folded form, content may be displayed in only some areas, or content may be displayed in all areas on the foldable display. For example, as shown in FIG. 2C, the foldable display in the folded form may be divided into the primary display, the secondary display, and the side display. Only the primary display may be used to display interface content output by the system, or only the primary display and the side display may be used to display interface content output by the system. The secondary display may be turned off without displaying any interface element. In an implementation, the secondary display may be configured to display a date, a time, and the like.

When the foldable display is in the unfolded form, the foldable display may display content in full screen. In a possible implementation, when the interface content is displayed in full screen, the interface content may occupy a part of the display area of the foldable display. For example, when the display 194 is an abnormally cut screen (Notch screen), the interface content is displayed in a middle part of the abnormally cut screen. When a black screen occurs on a side edge or edges of two sides, it may also be considered that the foldable display displays the interface content in full screen.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in an RGB format, a YUV format, or the like. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100, such as image recognition, facial recognition, speech recognition, and text understanding, can be implemented by using the NPU.

The external memory interface 120 may be configured to connect to an external memory card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer executable program code. The executable program code includes instructions. The processor 110 runs the instructions stored in the internal memory 121, to implement various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data, and a phone book) created in a process of using the electronic device 100, and the like. In addition, the internal memory 121 may include a high-speed random access memory, or may include a nonvolatile memory, for example, at least one magnetic disk storage component, a flash memory component, or a universal flash storage (universal flash storage, UFS).

The electronic device 100 may implement audio functions, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules of the audio module 170 are disposed in the processor 110.

The speaker 170A, also referred to as a "horn", is configured to convert an electrical audio signal into a sound signal. The electronic device 100 may be configured to listen to music or answer a hands-free call by using the speaker 170A. The receiver 170B, also referred to as an "earpiece", is configured to convert an electrical audio signal into a sound signal. When a call is answered or voice information is received by using the electronic device 100, the receiver 170B may be put close to a human ear to receive a voice.

The microphone 170C, also referred to as a "mike" or a "microphone", is configured to convert a sound signal into an electrical signal. When making a call or sending voice information, the user may make a sound by moving a human mouth close to the microphone 170C to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, identify a sound source, implement a directional recording function, and the like.

The headset interface 170D is configured to connect to a wired headset. The headset interface 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, or a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation by using the pressure sensor 180A. The electronic device 100 may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on an icon of Messages, an instruction for creating an SMS message is executed.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to perform image stabilization during photographing. For example, when the shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover by using the magnetic sensor 180D. Further, a feature such as automatic unlocking upon opening of the flip cover is set based on a detected opening or closing state of the leather case or a detected opening or closing state of the flip cover.

The acceleration sensor 180E may detect magnitudes of accelerations in various directions (usually on three axes) of the electronic device 100, and may detect a magnitude and a direction of gravity when the electronic device 100 is still. The acceleration sensor 180E may be further configured to identify a posture of the electronic device, and is used in an application such as switching between a landscape mode and a portrait mode or a pedometer.

The range sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically perform screen-off for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption to implement thermal protection. In some other embodiments, when the temperature is less than another threshold, the electronic device 100 heats the battery 142 to prevent the electronic device 100 from being abnormally powered off because of a low temperature. In some other embodiments, when the temperature is less than still another threshold, the electronic device 100 boosts an output voltage of the battery 142, to prevent abnormal power-off caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer a detected touch operation to the application processor, to determine a type of a touch event. The display 194 may provide a visual output related to the touch operation. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal part. The bone conduction sensor 180M may also be in contact with a human pulse, and receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded in the electronic device 100, and cannot be separated from the electronic device 100.

The following describes in detail, based on the electronic device 100 shown in FIG. 1, a display control method provided in an embodiment of this application with reference to other accompanying drawings.

In some application scenarios of this application, when a foldable display is in an unfolded state, an electronic device may display an interface (for example, a home screen or an application interface) on the foldable display in full screen. When the foldable display is switched from the unfolded state to a folded state, a display area of the foldable display may be divided into three display areas: a primary display, a secondary display, and a side display. The electronic device may display, by scaling down the interface on the primary display or the secondary display, the interface that is displayed in full screen when the foldable display is in the unfolded state. However, when the foldable display is in the folded state, in most cases, a user can view that the display area on the foldable display includes the primary display and the side display, or the secondary display and the side display. To fully utilize the display area of the foldable display and bring better visual experience to the user, this embodiment of this application provides the display control method. When the foldable display is in the unfolded state, the electronic device may display an interface (for example, the home screen or the application interface) on the foldable display in full screen. When the foldable display is switched from the unfolded form to the folded state, the electronic device may display, by scaling down the interface on the primary display or the secondary display, the interface that is displayed in full screen when the foldable display is in the unfolded state, or display, on both the primary display and the secondary display, interface content whose interface is scaled down. In addition, a beautified layer is displayed on the side display of the foldable display, and the beautified layer may display a pattern (for example, a spine pattern). Because the beautified layer with the pattern (for example, a spine-type pattern) is displayed on the side display, visual experience of a user is increased.

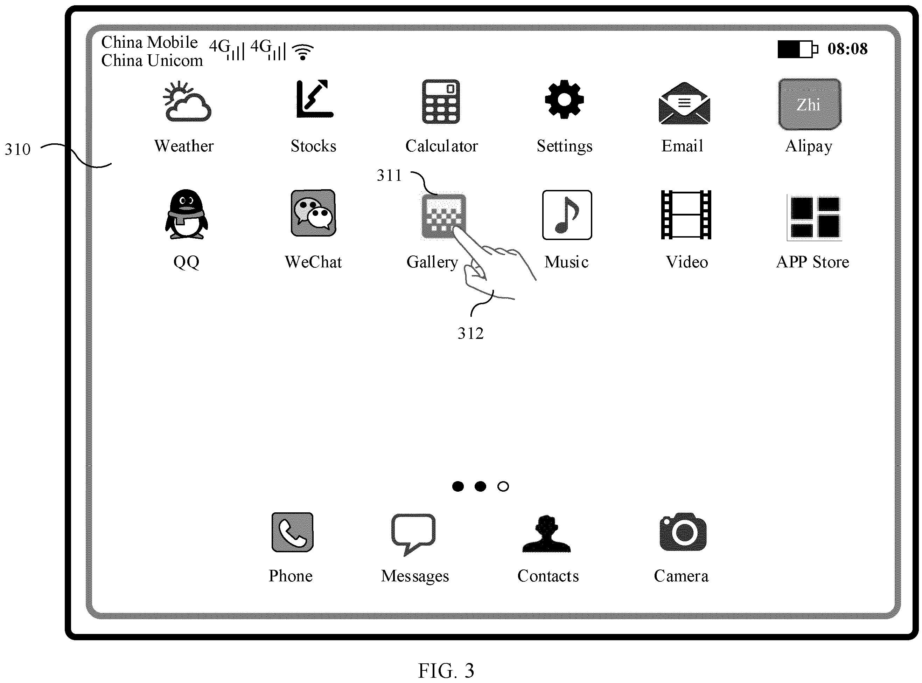

For example, as shown in FIG. 3, the foldable display of the electronic device is in the unfolded form. In the unfolded form, the electronic device may display a home screen 310 on the foldable display in full screen. The home screen 310 displays a page on which application icons are placed. The page includes a plurality of application icons (for example, a Weather application icon, a Stocks application icon, a Calculator application icon, a Settings application icon, an Email application icon, an Alipay application icon, a Facebook application icon, a Browser application icon, a Gallery application icon 311, a Music application icon, a Video application icon, and an App Store application icon). A page indicator is further included below the plurality of application icons, to indicate a positional relationship between a currently displayed page and another page. A plurality of tray icons (for example, a Phone application icon, a Messages application icon, a Contacts application icon, and a Camera application icon) are below the page indicator. The tray icons remain displayed when the page is switched, and the page may include a plurality of application icons and page indicators. Alternatively, the page indicator may not be a part of the page and may exist independently, and the tray icon is also optional. This is not limited in this embodiment of this application.

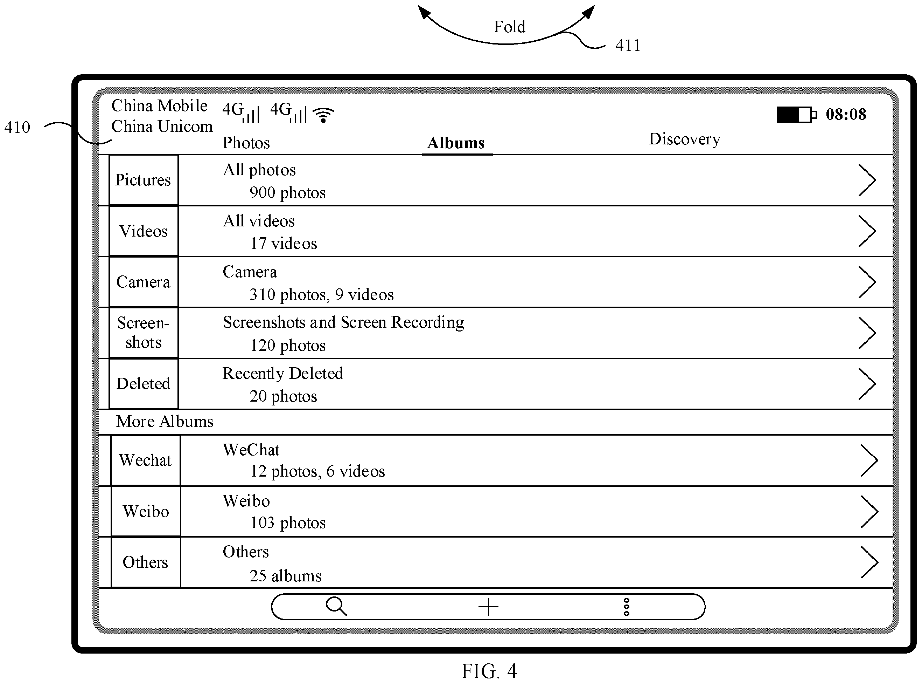

The electronic device may receive an input operation 312 (for example, tapping) of the user on the Gallery application icon 311, and in response to the input operation, a mobile terminal may display a gallery application interface 410 shown in FIG. 4.

As shown in FIG. 4, the gallery application interface 410 includes an Albums control and other controls (for example, a Photos control and a Discovery control). When the user taps the Albums control, the electronic device displays an interface corresponding to Albums. The display interface corresponding to the Albums control may include one or more album entries (for example, all photos album entry, all videos album entry, camera album entry, screenshot catalog album entry, recently deleted album entry, WeChat album entry, Weibo album entry, My Favorites album entry, or another album entry). The gallery application interface 410 further includes an album toolbar. The album toolbar includes more controls and other controls (for example, a search control or a new album control).

The electronic device may receive a folding operation 411 of the user on the foldable display. In response to the folding operation 411 of the user, the electronic device may switch the foldable display from the unfolded form to the folded form, display interface content of the gallery application interface on the primary display in the folded form, and simultaneously display the beautified layer on the side display in the folded form. In this way, the foldable display in the folded form can be fully utilized, to display the beautified layer on the side display. This can provide a beautiful display effect for the user, and show cultural heritage like a book spine, thereby improving user experience.

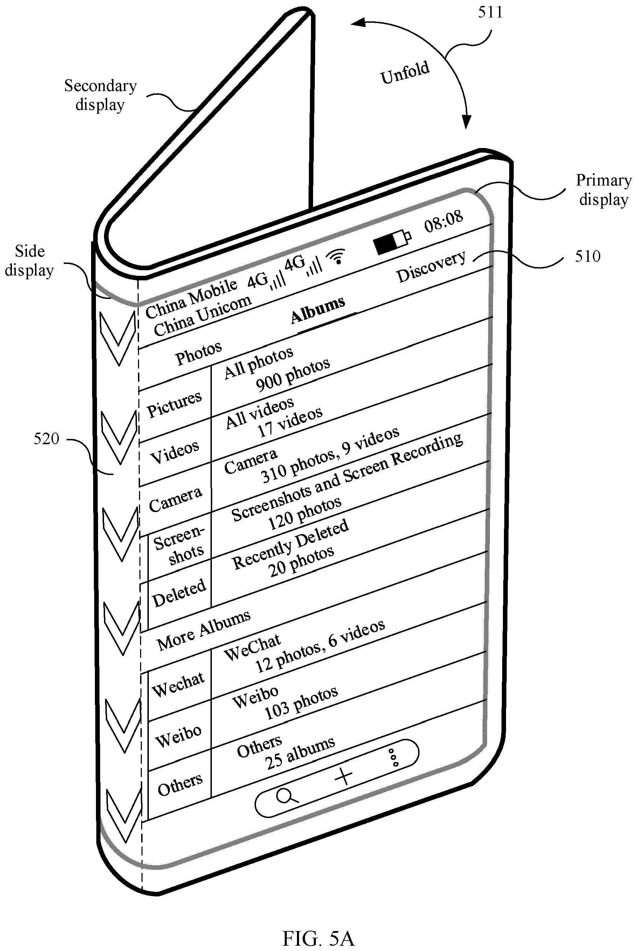

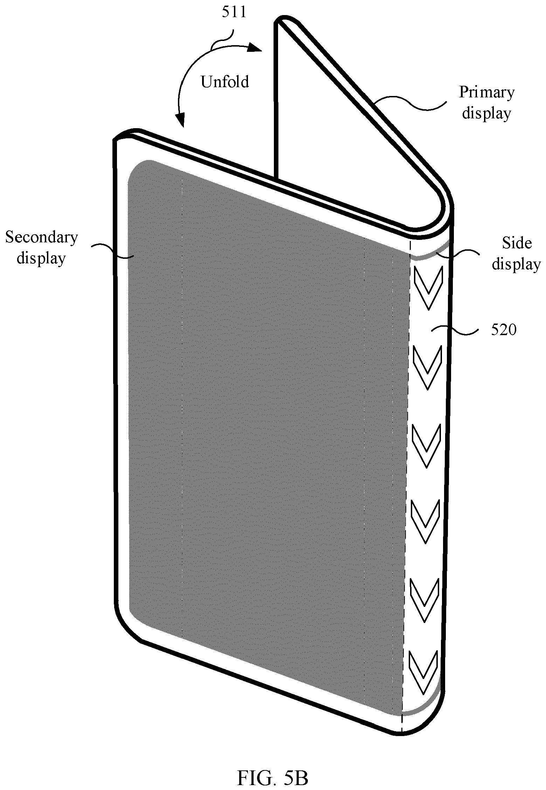

For example, as shown in FIG. 5A, the foldable display is in the folded state, and the electronic device may display a gallery application interface 510 on the primary display, and display a beautified layer 520 on the side display. Compared with the foregoing gallery application interface 410, the gallery application interface 510 is scaled down, and a pattern is displayed at the beautified layer 520. As shown in FIG. 5B, when the foldable display is in the folded form, the electronic device may not display any interface content on the secondary display. In some embodiments, the secondary display may also be configured to display another interface element that is output by a system of the electronic device and that is different from the gallery application interface 510 in FIG. 5A. That the secondary display does not display any interface content may mean that the secondary display is in a screen-off state and does not display any interface element. That the secondary display does not display any interface content may further mean that the secondary display is in a low-power working state. The secondary display does not display any interface content, but may receive a user operation and display corresponding interface content according to the user operation.

The electronic device may store one or a plurality of layer files, and the layer file includes a pattern, a transparency value, a blurring degree value, and the like. The plurality of layer files may be prestored on the electronic device, or may be obtained from a server in real time. This is not limited herein. When receiving the folding operation 411 shown in FIG. 4, in response to the folding operation 411, the electronic device reads the layer file, displays a pattern in the layer file at the beautified layer of the side display, sets transparency of the beautified layer based on the transparency value in the layer file, and sets a blurring degree of the beautified layer based on the blurring degree value in a first layer file.

In a possible implementation, when the foldable display is switched from the unfolded form to the folded form, the electronic device may detect a screen orientation of the foldable display in the folded form by using an acceleration sensor, a gyroscope sensor, or the like. When the secondary display of the foldable display faces upward relative to a horizontal plane, the electronic device may display the layer application interface 510 on the secondary display, display the beautified layer 520 on the side display, and display no interface content on the primary display, or display, on the primary display, another interface element that is output by the system of the electronic device and that is different from the gallery application interface 510. In this way, when the foldable display is in the folded form, the electronic device may display, in a reduced scale, content displayed when the foldable display is in the unfolded form, on a display area easily seen by the user (for example, a display area facing upwards relative to the horizontal plane). In this way, it can be convenient for the user to see interface content displayed on the foldable display in time when a form of the foldable display is switched.

In some application scenarios, when the foldable display is in the folded form, the electronic device may display the application interface on the primary display of the foldable display, and display the beautified layer on the side display. The electronic device may receive an unfolding operation of the user, and in response to the unfolding operation, the electronic device may switch the foldable display from the folded form to the unfolded form. Within a period of time (for example, within 0.5s) after the foldable display is switched to the unfolded form, the electronic device may slide the beautified layer displayed on the side display out along a side direction in which the secondary display is located. At the same time, the application interface displayed on the primary display synchronously extends along a direction in which the beautified layer slides, until the foldable display displays the application interface in full screen. In a possible implementation, when the foldable display is in the folded form, the electronic device may display the application interface on the secondary display, and display the beautified layer on the side display. When the electronic device receives the unfolding operation of the user, in response to the unfolding operation, the electronic device may switch the foldable display from the folded form to the unfolded form. In addition, within a period of time (for example, within 0.5s), the electronic device may slide the beautified layer displayed on the side display out along a side direction in which the primary display is located, and the application interface displayed on the primary display synchronously extends along a direction in which the beautified layer slides, until the foldable display displays the application interface in full screen. In this way, progressive exit of the beautified layer displayed in a bent area can be implemented, and continuous change of the application interface from primary-display display to full-screen display can be implemented. This avoids bringing a skipping visual sense to the user when the application interface is extended to the full screen, and improves visual experience of the user.

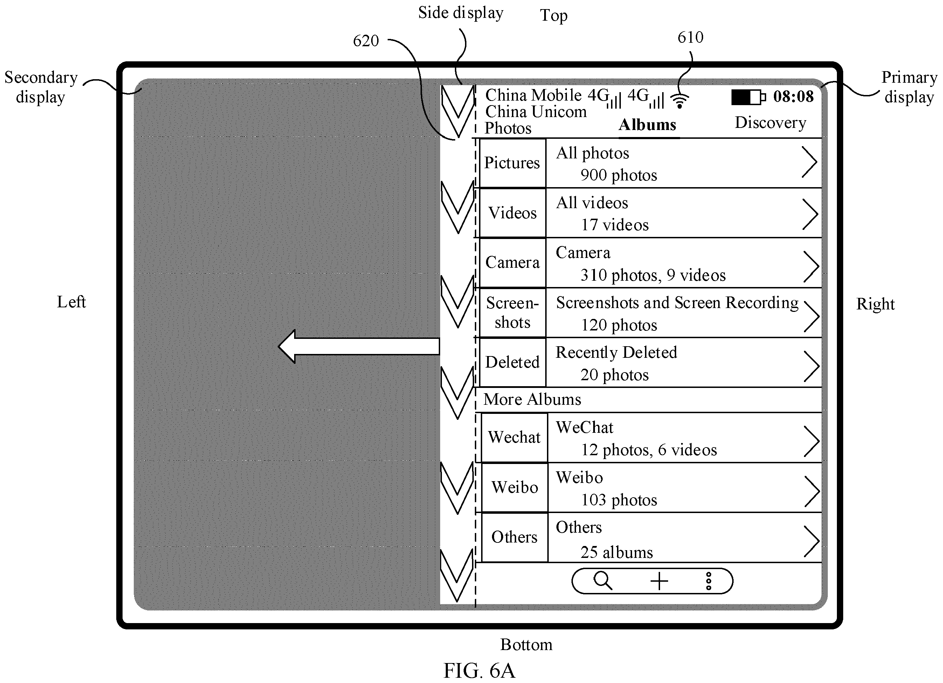

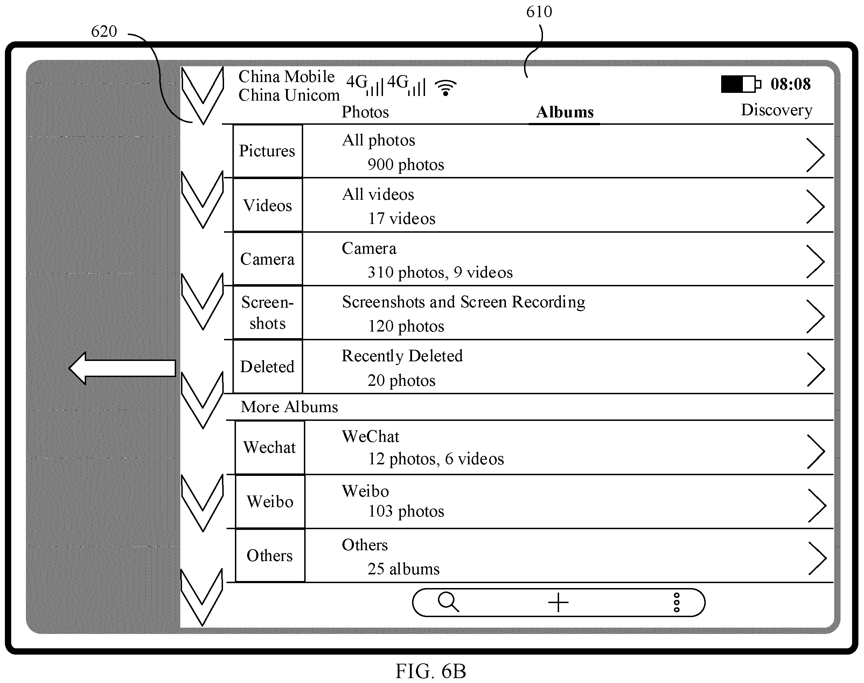

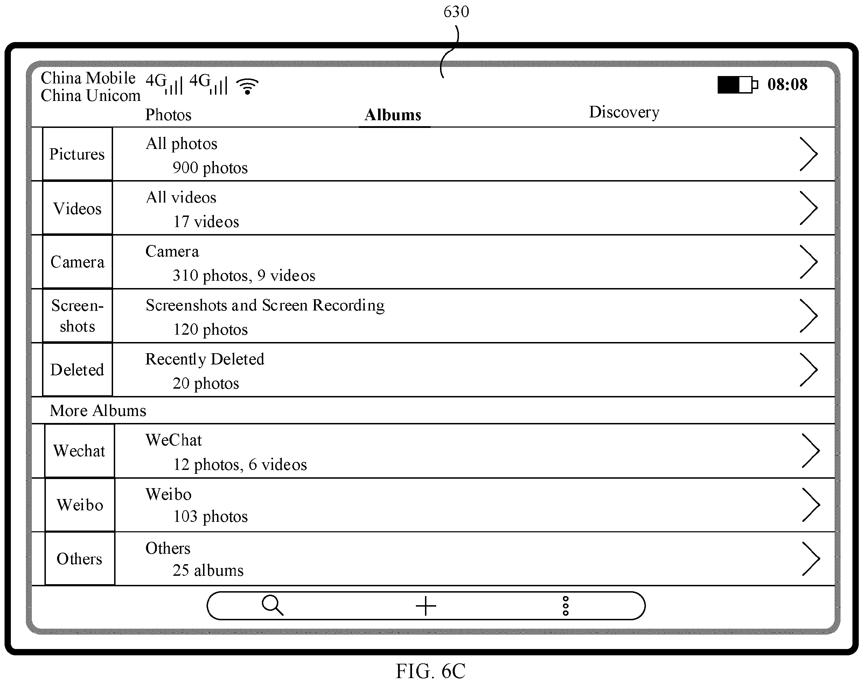

For example, as shown in FIG. 6A, when the foldable display of the electronic device is switched to the unfolded form, the electronic device may slide a beautified layer 620 displayed on the side display of the foldable display along a direction in which the secondary display is located (for example, a left side direction of the foldable display). Synchronously, the electronic device may slide a gallery application interface 610 along with the beautified layer 620 in a direction in which the secondary display is located (for example, a left side of the foldable display). For a sliding process of the beautified layer 620 in the bent area and a process of extending the gallery application interface 610 to the full screen, refer to FIG. 6A, FIG. 6B, and FIG. 6C.

As shown in FIG. 6B, the beautified layer 620 of the side display slides in the direction in which the secondary display is located (for example, the left side of the foldable display). Synchronously, the gallery application interface 610 also extends along with the beautified layer 620 of the side display in the direction in which the secondary display is located (for example, the left side direction of the foldable display).

As shown in FIG. 6C, the electronic device displays a gallery application interface 630 on the foldable display in full screen. Compared with the gallery application interface 610 shown in FIG. 6A, the gallery application interface 630 is scaled up. The gallery application interface 630 in FIG. 6C is the same as the gallery application interface 410 in FIG. 4. Therefore, the text description of the gallery application interface 410 in FIG. 4 is also applicable to the gallery application interface 630, and details are not described herein again.

In a possible implementation, when the foldable display is switched from the unfolded form to the folded form, within a period of time (for example, within 0.5s) after the foldable display is switched to the unfolded form, the electronic device may slide the beautified layer displayed on the side display out along the bottom direction or the top direction of the bent area. At the same time, the electronic device may extend the application interface displayed on the primary display along the secondary display direction until the application interface is displayed on the foldable display in full screen. In this way, progressive exit of the beautified layer displayed in the bent area can be implemented, and continuous change of the application interface from primary-display display to full-screen display can be implemented. This avoids bringing a skipping visual sense to the user when the application interface is extended to the full screen, and improves visual experience of the user.

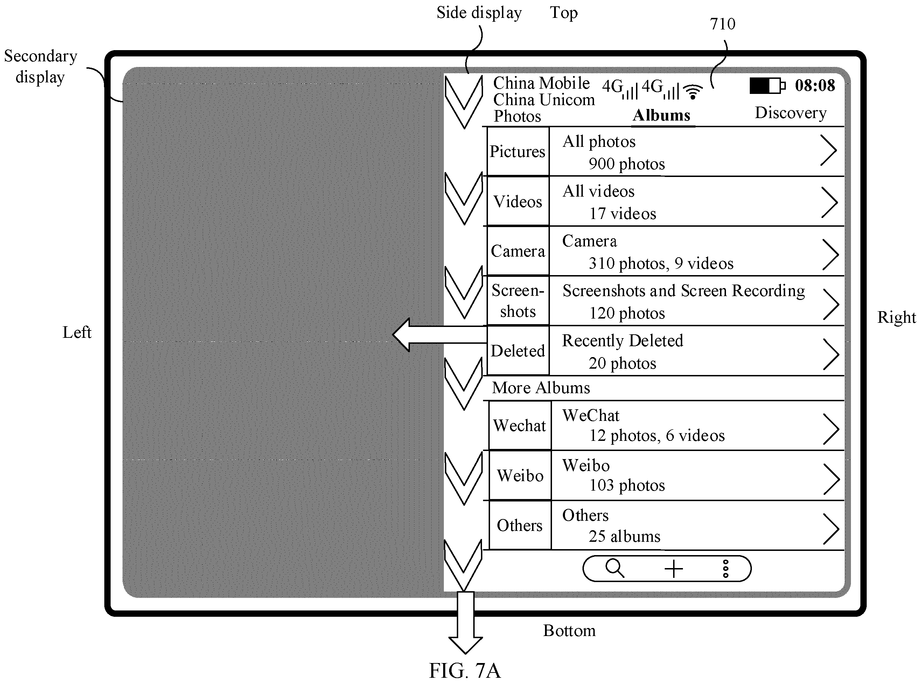

In accordance with the claimed invention, as shown in FIG. 7A, when the foldable display of the electronic device is switched to the unfolded form, the electronic device slides a beautified layer 720 of the side display in a direction from the top to the bottom of the side display. When the beautified layer 720 slides, the electronic device slides a gallery application interface

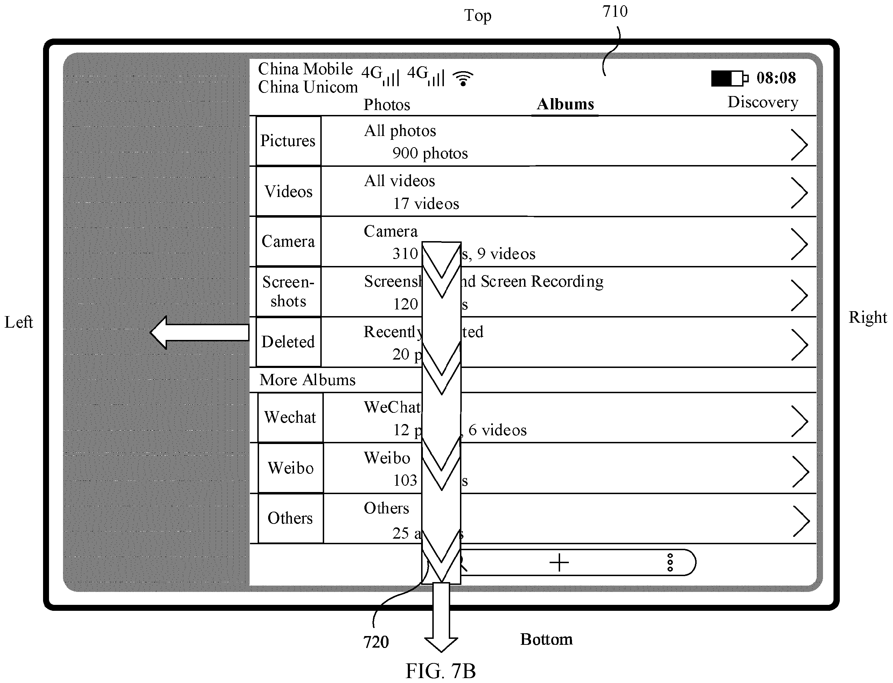

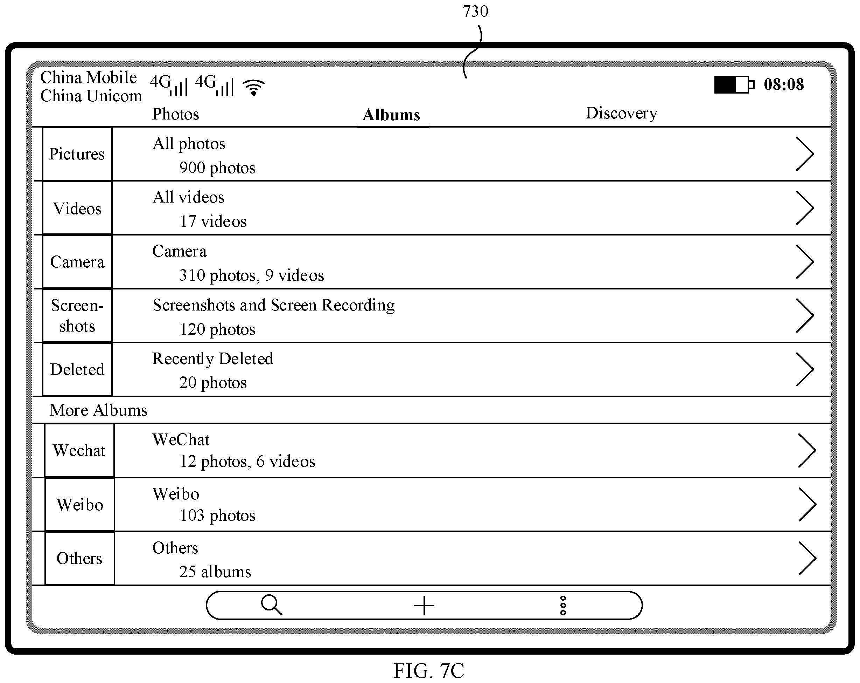

710 along the direction in which the secondary display is located (for example, the left side of the foldable display). The gallery application interface 710 in FIG. 7A is the same as the gallery application interface 610 in FIG. 6A. Therefore, the text description of the gallery application interface 610 in FIG. 6A is also applicable to the gallery application interface 710, and details are not described herein again. For a sliding process of the beautified layer 620 in the bent area and a process of extending the gallery application interface 610 to the full screen, refer to FIG. 7A, FIG. 7B, and FIG. 7C.

As shown in FIG. 7B, the beautified layer 720 of the side display slides in the direction from the top to the bottom of the side display. Synchronously, the gallery application interface 710 also extends along the direction in which the secondary display is located (for example, the left side direction of the foldable display).

As shown in FIG. 7C, the electronic device displays a gallery application interface 730 on the foldable display in full screen. Compared with the gallery application interface 710 shown in FIG. 7A, the gallery application interface 730 is scaled up. The gallery application interface 730 in FIG. 7C is the same as the gallery application interface 410 in FIG. 4. Therefore, the text description of the gallery application interface 410 in FIG. 4 is also applicable to the gallery application interface 730, and details are not described herein again.

In some application scenarios, because different users have different aesthetics, the user has a personalized requirement for a pattern at the beautified layer on the side display of the foldable display. Therefore, in this embodiment of this application, the electronic device may set different patterns at the beautified layer on the side display based on requirements of different users. The electronic device may receive an input of the user, and download one or more layer files (for example, an RGBA8888 format) from the server. The layer file includes a pattern that can be used to set at the beautified layer on the side display, the transparency value, and the blurring degree value. In a possible implementation, the electronic device may periodically (for example, every week) download the one or more layer files from the server. After the electronic device downloads the one or more layer files, the electronic device may receive an input of the user, and set a pattern selected by the user for the beautified layer of the side display. In this way, the personalized requirement of the user for the pattern displayed on the side display can be met.

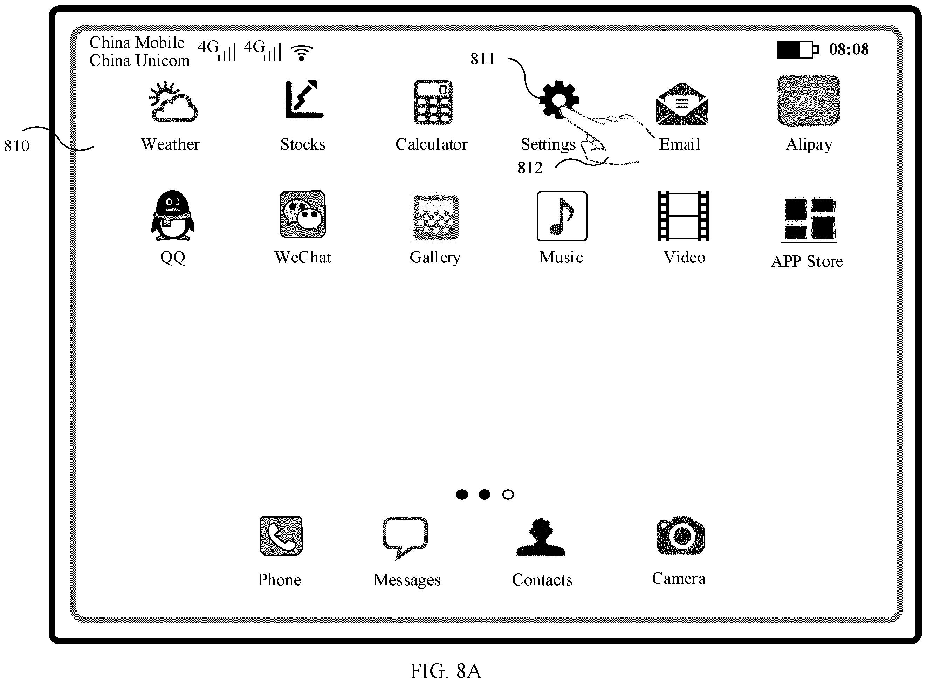

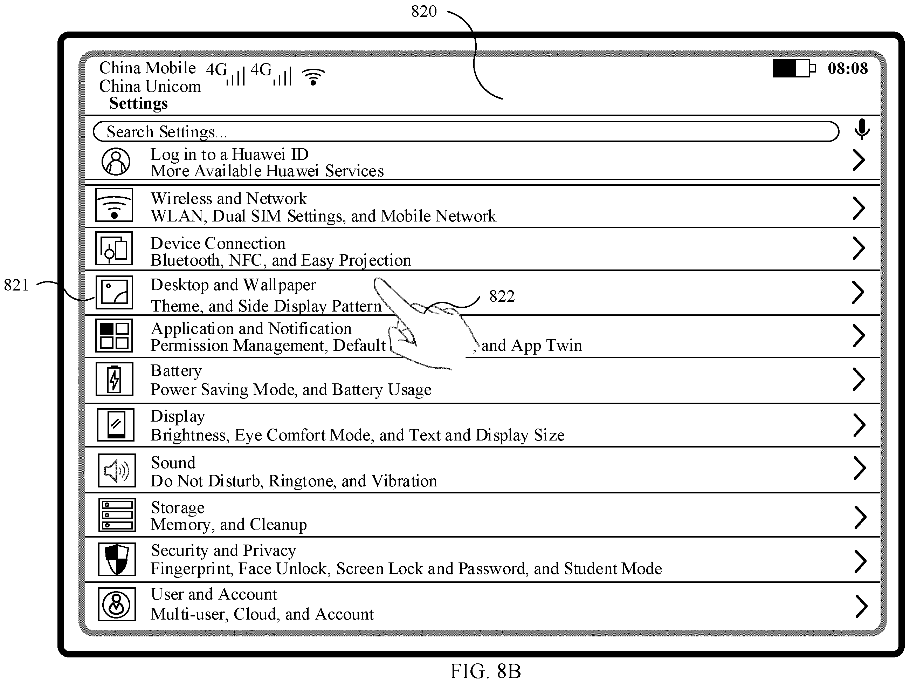

For example, as shown in FIG. 8A, the foldable display of the electronic device is in the unfolded form. In the unfolded form, the electronic device may display a home screen 810 in full screen. The home screen 810 displays a page on which application icons are placed. The page includes a plurality of application icons (for example, a Weather application icon, a Stocks application icon, a Calculator application icon, a Settings application icon 811, an Email application icon, an Alipay application icon, a Facebook application icon, a Browser application icon, a Gallery application icon, a Music application icon, a Video application icon, and an App Store application icon). The electronic device may receive an input operation 812 (for example, tapping) of the user on the Settings application icon 811, and in response to the input operation 812, the electronic device may display a settings application interface 820 shown in FIG. 8B by using the foldable display.

As shown in FIG. 8B, the settings application interface 820 displays a wireless and network setting entry, a device connection setting entry, a desktop and wallpaper setting entry 821, an application and notification setting entry, a battery setting entry, a display setting entry, a sound setting entry, a storage setting entry, a security and privacy setting entry, and a user and account setting entry. A corresponding title and text description is displayed on each setting entry of the settings application interface 820. For example, a title corresponding to the wireless and network setting entry is "Wireless and Network", and a text description is "WLAN, Dual SIM Settings, and Mobile Network". A title corresponding to the device connection setting entry is "Device Connection", and a text description is "Bluetooth, NFC, and Easy Projection". A title corresponding to the desktop and wallpaper setting entry 821 is "Desktop and Wallpaper", and a text description is "Theme, and Side Display Pattern". A title corresponding to the application setting entry is "Application", and a text description is "Permission Management, Default Application, and App Twin". A title corresponding to the battery setting entry is "Battery", and a text description is "Power Saving Mode, and Battery Usage". A title corresponding to the display setting entry is "Display", and a text description is "Brightness, Desktop Style, and Text and Display Size". A title corresponding to the sound setting entry is "Sound", and a text description is "Do Not Disturb, Ringtone, and Vibration". A title corresponding to the storage setting entry is "Storage", and a text description is "Cleanup". A title corresponding to the security and privacy setting entry is "Security and Privacy", and a text description is "Face Unlock, Fingerprint, and Lock Screen Password". A title corresponding to the user and account setting entry is "User and Account", and a text description is "Multi-user, Cloud, and Account".

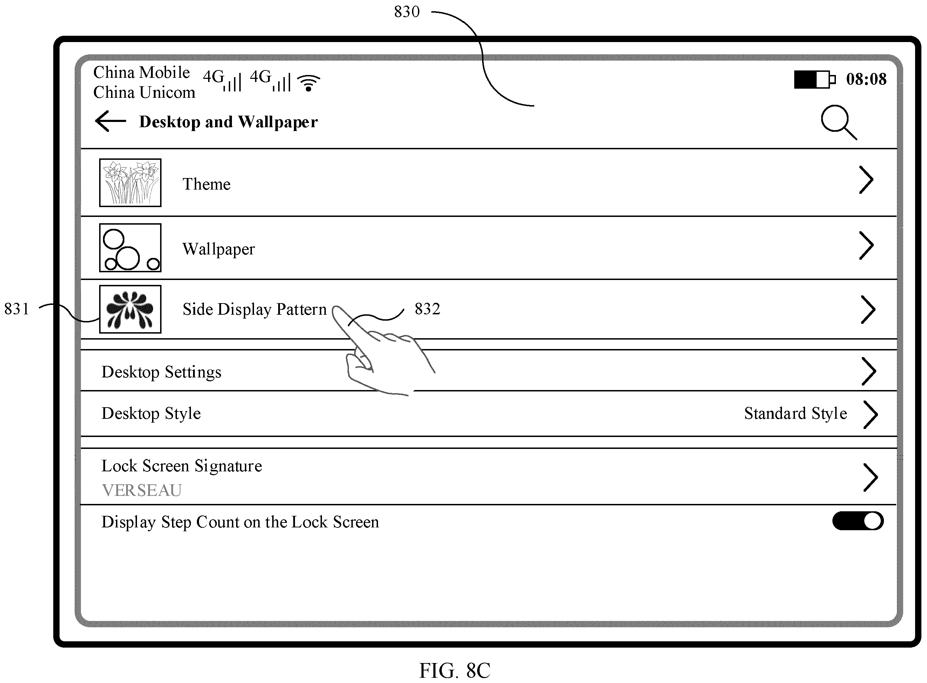

The electronic device may receive an input operation 822 (for example, tapping) of the user for the desktop and wallpaper setting entry 821. In response to the input operation 822, the electronic device may display a desktop and wallpaper setting interface 830 shown in FIG. 8C.

As shown in FIG. 8C, the desktop and wallpaper setting interface 830 displays a theme setting entry, a wallpaper setting entry, a side display pattern setting entry 831, a desktop setting entry, a desktop style setting entry, a lock screen signature setting entry, and a switch of displaying step count on the lock screen. The theme setting entry may be used to receive an input of the user. In response to the input, the electronic device may set a theme of a display interface of the electronic device. The theme may include a desktop wallpaper, an application icon style, a font, and the like. The wallpaper setting interface may be used to receive an input of the user. In response to the input, the electronic device may set a lock screen wallpaper or a desktop wallpaper of the electronic device. The desktop setting entry may be used to receive an input of the user. In response to the input, the electronic device may set a layout of application icons on the desktop.

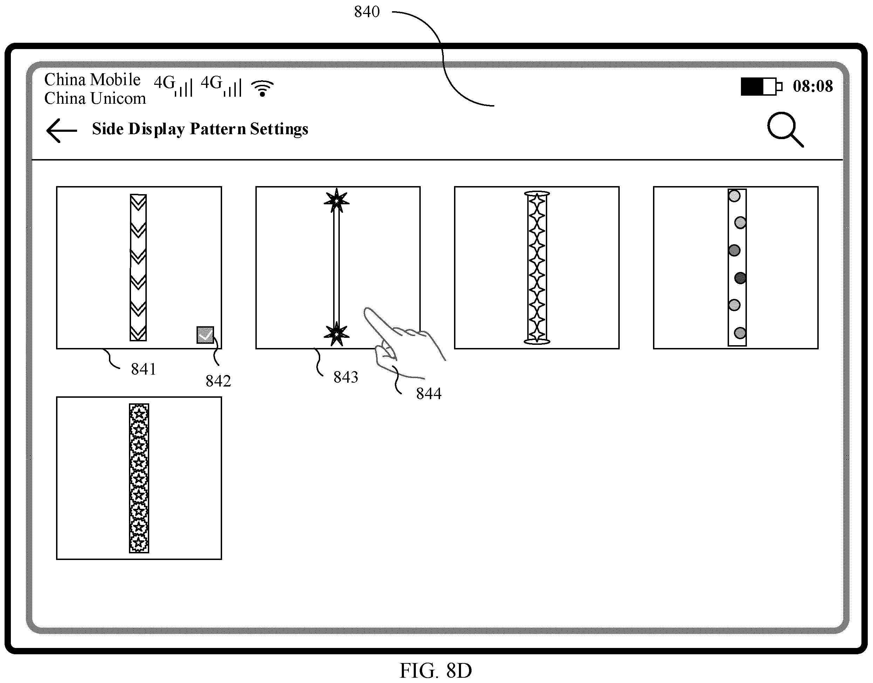

The electronic device may receive an input operation 832 (for example, tapping) of the user for the side display pattern setting entry 831. In response to the input operation 832, the electronic device may display a side display pattern setting interface 840 shown in FIG. 8D.

As shown in FIG. 8D, the side display pattern setting interface 840 includes one or more pictures. Each picture includes a different pattern, and the pattern may be displayed at the beautified layer of the side display. For example, a picture 841, a picture 843 and the like shown in FIG. 8D. The electronic device may display a mark 842 on the picture 841. The mark 842 may be used to prompt the user that a currently displayed pattern on the side display layer is a pattern in the picture 841.

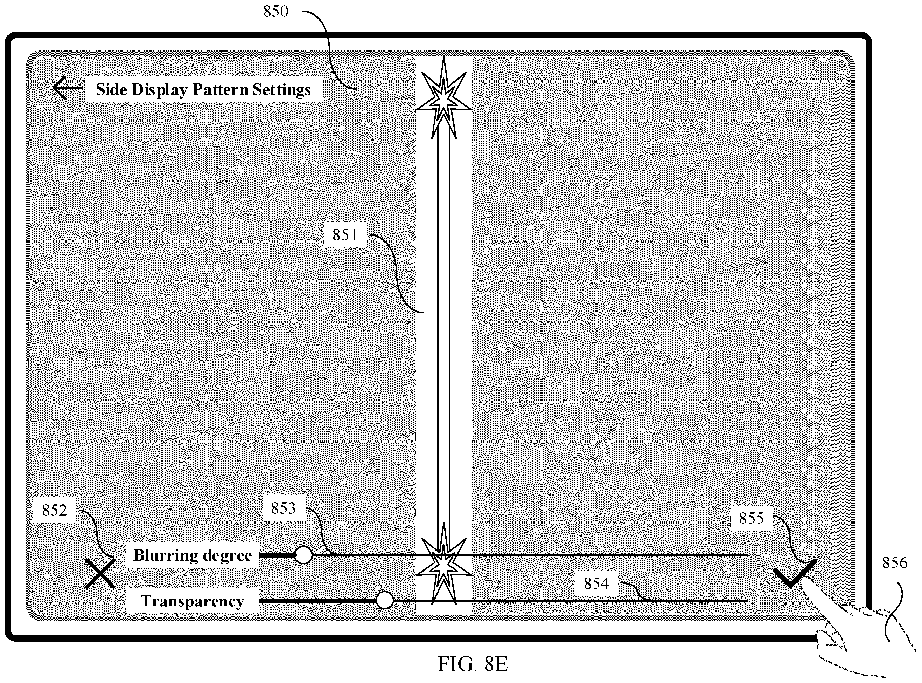

The electronic device may receive an input operation 844 (for example, tapping) of the user for the picture 843. In response to the input operation 844, the electronic device may display, on the foldable display, a side display pattern setting window 850 shown in FIG. 8E.

As shown in FIG. 8E, the side display pattern setting window 850 may include a pattern 851, a cancel button 852, a blurring setting bar 853, a transparency setting bar 854, and a confirm button 855. The cancel button 852 is used to receive an input of the user. In response to the input, the electronic device may not save a blurring degree value displayed in the blurring setting bar 853 and a transparency value displayed in the transparency setting bar 854, and returns to the side display pattern setting interface 840 shown in FIG. 8D. The blurring setting bar 853 may be used to receive an input of the user, to adjust a blurring degree of the pattern 851. The transparency setting bar 854 may be used to receive an input of the user, to adjust transparency of the pattern 851. The confirm button 855 is used to receive an input of the user, to generate a layer file (for example, may be in a format of RGBA8888) used to be displayed at the beautified layer of the side display. The layer file may include the pattern 851, the blurring degree value displayed in the blurring setting bar 853, and the transparency value displayed in the transparency setting bar 854.

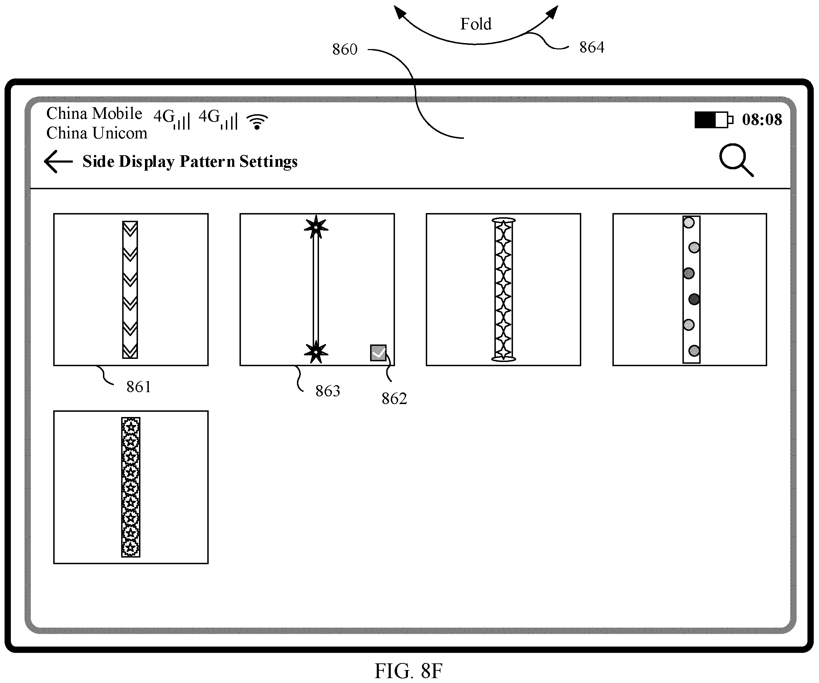

The electronic device may receive an input operation 856 (for example, tapping) of the user for the confirm button 855. In response to the input operation 856, the electronic device may determine the pattern 851 shown in FIG. 8E as a pattern in the display layer of the bent area, and display a side display pattern setting interface 860 shown in FIG. 8F.

As shown in FIG. 8F, the side display pattern setting interface 860 includes one or more pictures (for example, a picture 861 and a picture 863). The picture 863 includes the pattern 851 shown in FIG. 8E. The electronic device may display a mark 862 on the picture 863, to prompt the user that a currently displayed pattern at the beautified layer of the side display is a pattern in the picture 863.

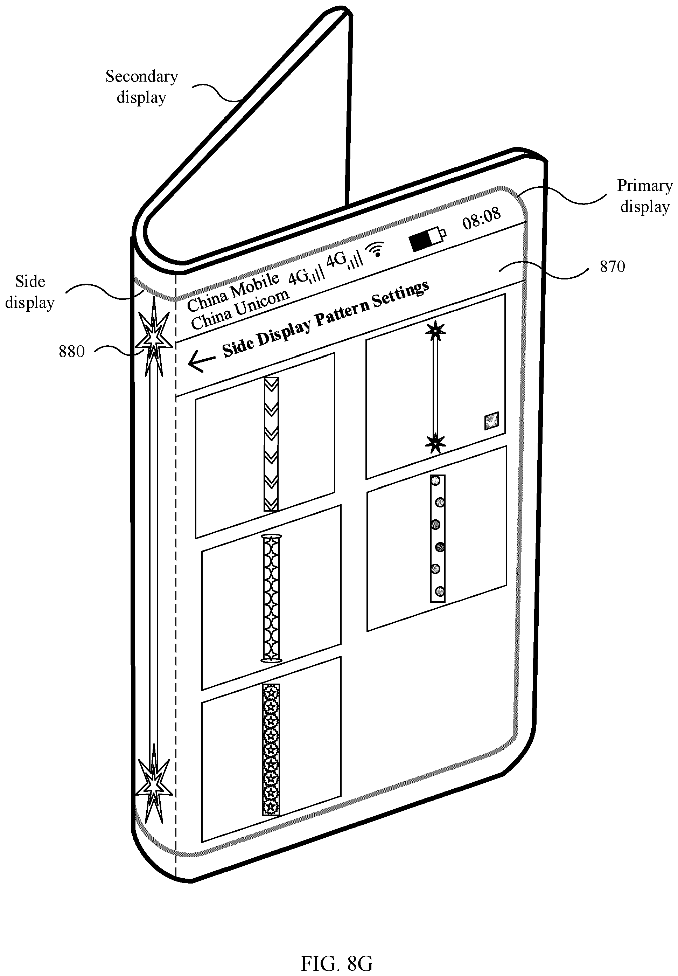

The electronic device may receive a folding operation 864 of the user. In response to the folding operation 864, the electronic device may switch the foldable display from the unfolded form to the folded form. When the foldable display is switched to the folded form, the electronic device may display, on the side display, a beautified layer 880 shown in FIG. 8G.

As shown in FIG. 8G, the foldable display is in the folded state, and the electronic device may display a side display pattern setting interface 870 on the primary display. A pattern at the beautified layer 880 shown in FIG. 8G is the same as the pattern at the beautified layer 851 shown in FIG. 8E. Compared with the side display pattern setting interface 860 shown in FIG. 8F, the side display pattern setting interface 870 shown in FIG. 8G is scaled down.

In a possible implementation, when the foldable display is in the folded form, the electronic device may display, on the primary display or the secondary display of the foldable display, interface content output by the system, and display the beautified layer on the side display. The electronic device may receive an input operation (for example, sliding) of the user for the side display. In response to the input operation (for example, sliding), the electronic device may switch between patterns at the beautified layer of the foldable display.

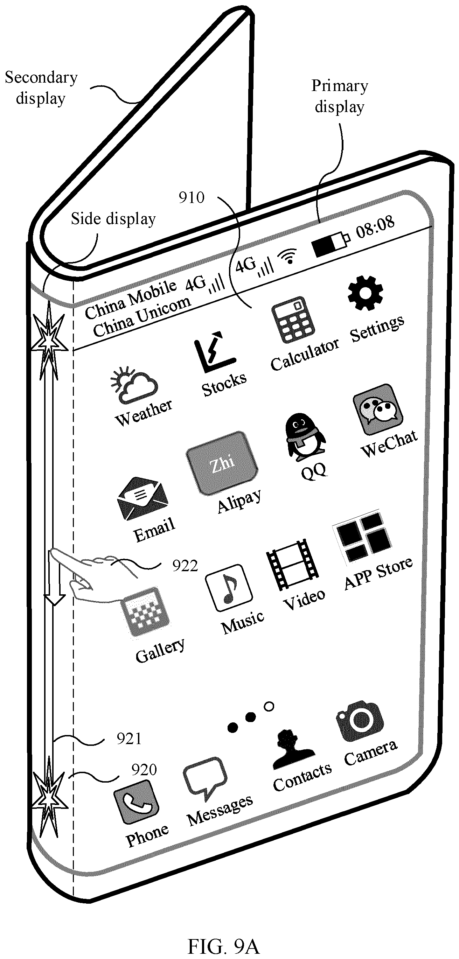

For example, as shown in FIG. 9A, the foldable display of the electronic device is in the folded form, and the electronic device may display a home screen 910 on the primary display of the foldable display, and display a beautified layer 920 on the side display of the foldable display. A pattern 921 is displayed at the beautified layer 920. The home screen 910 displays a page on which application icons are placed, and the page includes a plurality of application icons (for example, a Weather application icon, a Stocks application icon, a Calculator application icon, a Settings application icon, an Email application icon, an Alipay application icon, a Facebook application icon, a Browser application icon, a Gallery application icon, a Music application icon, a Video application icon, and an App Store icon).

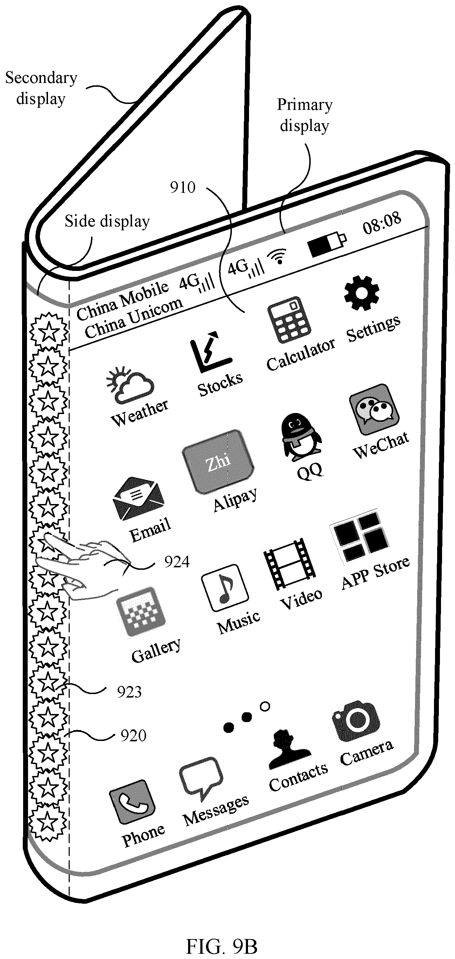

The electronic device may receive an input operation 922 (for example, sliding from top to bottom) of the user for the side display in FIG. 9A. In response to the input operation 922, the electronic device may switch from the pattern 921 displayed at the beautified layer 920 on the side display to a pattern 923 shown in FIG. 9B.

The electronic device may store a plurality of layer files, and the layer file includes a pattern, a transparency value, a blurring degree value, and the like. The plurality of layer files may be prestored on the electronic device, or may be obtained from the server in real time. This is not limited herein. The electronic device may sort the plurality of layer files. The electronic device displays a pattern in a first layer file (for example, a layer file whose sequence number is 2) at the beautified layer of the side display, sets transparency of the beautified layer based on a transparency value in the first layer file, and sets a blurring degree of the beautified layer based on a blurring degree value in the first layer file. When the electronic device receives the input operation 922, the electronic device may read a second layer file (for example, a layer file whose sequence number is 3), display a pattern in the second layer file at the beautified layer of the side display, set transparency of the beautified layer based on a transparency value in the second layer file, and set a blurring degree of the beautified layer based on a blurring degree value in the second layer file.

In a possible implementation, when the foldable display is in the folded form, the electronic device may display, on the primary display or the secondary display of the foldable display, interface content output by the system, and display the beautified layer on the side display. A pattern is displayed at the beautified layer. The electronic device may receive an input operation of the user for the side display. In response to the input operation, the electronic device may not display the beautified layer on the side display. In this way, the electronic device can receive a user input based on a user requirement, and cancel displaying the beautified layer on the side display of the foldable display. This improves user experience.

For example, as shown in FIG. 9B, the foldable display is in the folded form, and the electronic device displays the home screen 910 on the primary display of the foldable display, and displays the beautified layer 920 on the side display of the foldable display. As shown in FIG. 9B, the pattern 923 is displayed at the beautified layer 920. For a text description of the home screen 910, refer to the embodiment shown in FIG. 9A. Details are not described herein again.

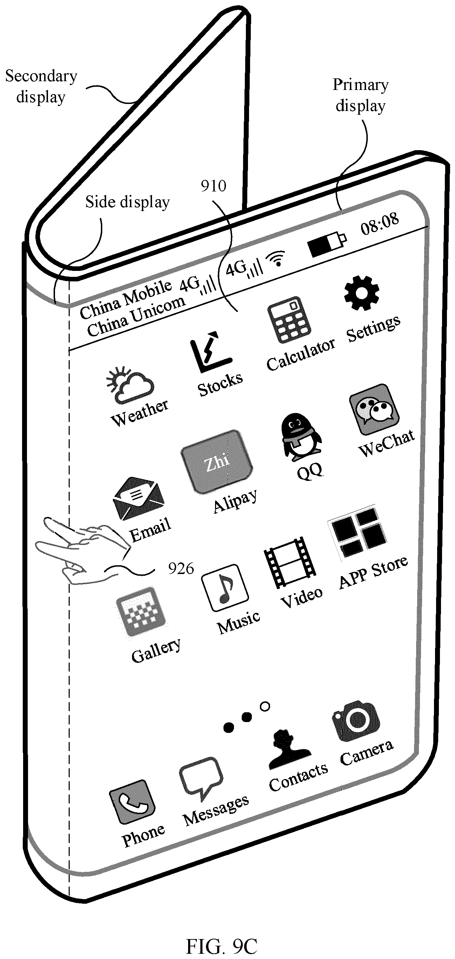

The electronic device may receive an input operation 924 (for example, double-tapping) of the user for the side display, as shown in FIG. 9C. In response to the input operation 924, the electronic device may not display the beautified layer on the side display of the foldable display.

In a possible implementation, when the foldable display is in the folded form, the electronic device may display, on the primary display or the secondary display of the foldable display, interface content output by the system, and may not display the beautified layer on the side display. The electronic device may receive an input operation of the user for the side display. In response to the input operation, the electronic device may display the beautified layer on the side display. A pattern is displayed at the beautified layer. In this way, after the electronic device cancels displaying the beautified layer on the side display, the electronic device can receive a user input based on a user requirement, and display the beautified layer on the side display again. This improves user experience.

For example, as shown in FIG. 9C, the foldable display is in the folded form, and the electronic device displays the home screen 910 on the primary display of the foldable display. As shown in FIG. 9C, the electronic device does not display the beautified layer on the side display of the foldable display. For a text description of the home screen 910, refer to the embodiment shown in FIG. 9A. Details are not described herein again.

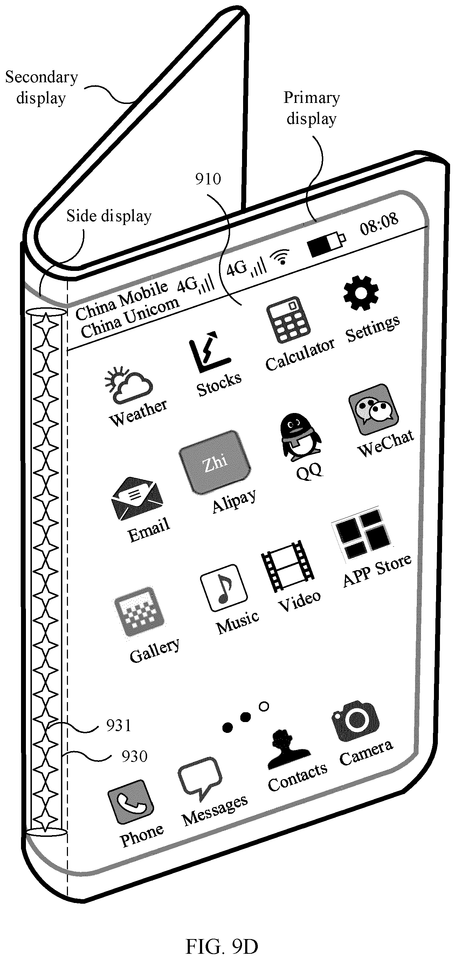

The electronic device may receive an input operation 926 (for example, double-tapping) of the user for the side display. In response to the input operation 926, the electronic device may display, on the side display, a beautified layer 930 shown in FIG. 9D. A pattern 931 is displayed at the beautified layer 930.

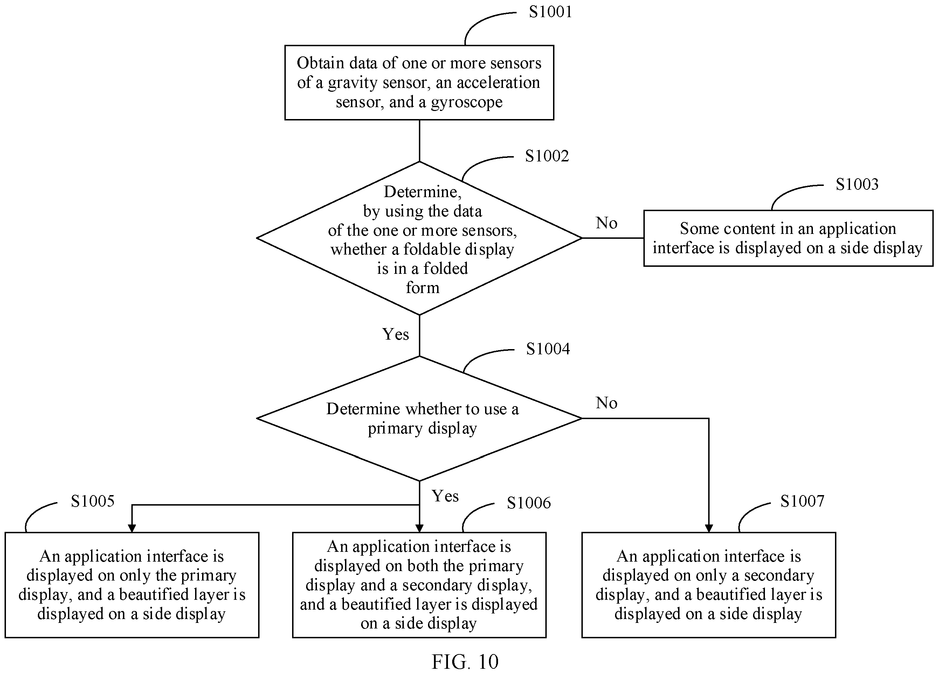

FIG. 10 is a schematic flowchart of a display control method according to an embodiment of this application. As shown in FIG. 10, the method includes the following steps:
S1001: An electronic device obtains data of one or more sensors of a gravity sensor, an acceleration sensor, and a gyroscope.
S1002: The electronic device determines, by using the data of the one or more sensors, whether a foldable display is in a folded form, and if yes, step S1004 is performed, or if no, step S1003 is performed.

The electronic device may determine, by using the one or more sensors of the gravity sensor, the acceleration sensor, and the gyroscope, information such as a folded/unfolded form, a screen orientation, and an included screen angle that are of the foldable display and a change process.

S1003: The electronic device displays some content in an application interface by using a side display of the foldable display.

When the foldable display of the electronic device is in the unfolded form, the electronic device may display the application interface by using all display areas of the foldable display. A display area of the side display of the foldable display may display some content in the application interface.

S1004: The electronic device determines whether to use a primary display. If yes, step S1005 or step S1006 is performed, or if no, step S1007 is performed.

The electronic device may determine, by using the one or more sensors of the gravity sensor, the acceleration sensor, and the gyroscope, an orientation of the primary display when the foldable display is in the folded form. When the primary display is upward relative to a horizontal line, the electronic device may project interface content output by a display system to the primary display for display, and a secondary display may not display the interface content. When the secondary display faces upward relative to the horizontal line, the electronic device may project the interface content output by the display system to the secondary display for display, and the primary display may not display the interface content.

In a possible implementation, when the foldable display is switched from the unfolded form to the folded form, the electronic device may project, by default, the interface content output by the display system to the primary display, and does not display the interface content by using the secondary display.

In a possible implementation, when the foldable display is in the folded form, if the electronic device currently opens a photographing application or a video playback application, the electronic device may display application interface content by using both the primary display and the secondary display. For example, the electronic device may display a photographing interface on both the primary display and the secondary display, or the electronic device may display a video playback interface on both the primary display and the secondary display.

S1005: The electronic device displays an application interface by using only the primary display of the foldable display, and displays a beautified layer by using a side display.

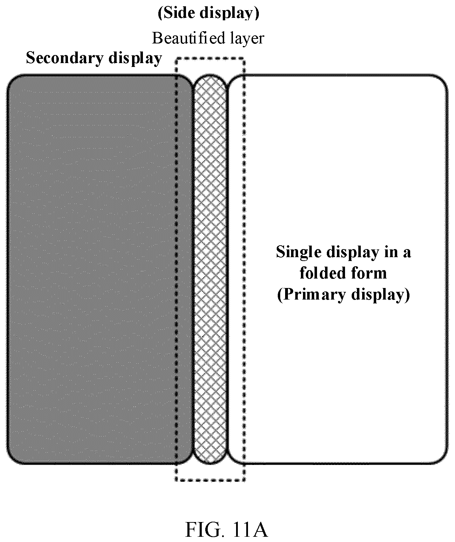

As shown in FIG. 11A, when the foldable display is in the folded form, the electronic device may display the application interface by using the primary display of the foldable display, displays the beautified layer by using the side display, and does not use the secondary display to display the application interface, or the secondary display is in a screen-off state.

S1006: The electronic device displays an application interface by using both the primary display and the secondary display of the foldable display, and displays a beautified layer by using a side display.

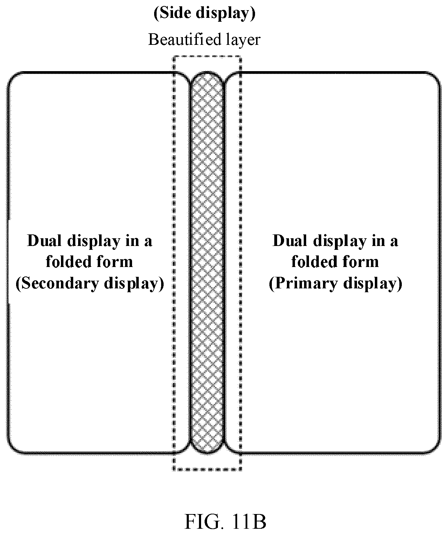

As shown in FIG. 11B, when the foldable display is in the folded form, the electronic device may simultaneously display the application interface by using the primary display and the secondary display of the foldable display, and display the beautified layer by using the side display. For example, the foldable display is in the folded form. When the electronic device opens the photographing application to photograph, to enable both a photographer and a photographed person to see a preview image, the electronic device may simultaneously display, by using the primary display and the secondary display, an image captured by a camera, and display the beautified layer by using the side display. For another example, the foldable display is in the folded form. When the electronic device opens the video playback application to play a video, to enable both a user and another user sitting opposite to the user to watch the video, the electronic device may simultaneously display video playback content by using the primary display and the secondary display of the foldable display, and display the beautified layer by using the side display. The example is merely used to explain this application and shall not constitute a limitation.

S1007: The electronic device displays an application interface by using only the secondary display of the foldable display, and displays a beautified layer by using a side display.

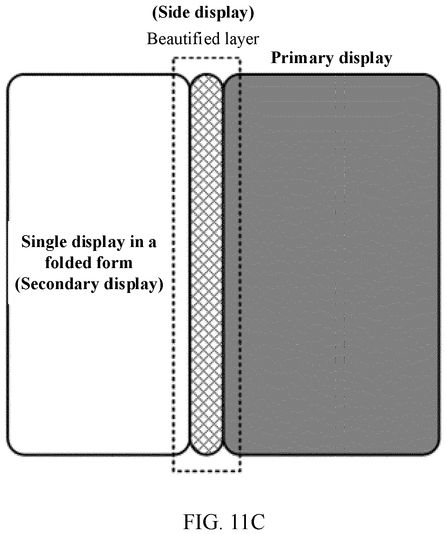

As shown in FIG. 11C, when the foldable display is in the folded form, if the secondary display of the electronic device faces upward relative to a horizontal plane, the electronic device may display the application interface by using the secondary display, and display the beautified layer by using the side display.

In this embodiment of this application, when the foldable display is in the unfolded state, the electronic device may display an interface (for example, a home screen or the application interface) on the foldable display in full screen. When the foldable display is switched from the unfolded state to the folded state, the electronic device may display, by scaling down the interface on the primary display or the secondary display, the interface that is displayed in full screen when the foldable display is in the unfolded state, or display, on both the primary display and the secondary display, interface content whose interface is scaled down. In addition, the electronic device displays the beautified layer on the side display of the foldable display, and the beautified layer may display the pattern (for example, a spine pattern). Because the beautified layer with the pattern (for example, a spine-type pattern) is displayed on the side display, visual experience of a user is increased.

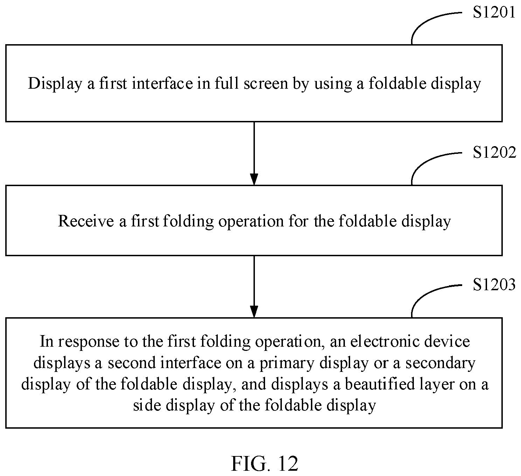

FIG. 12 is a schematic flowchart of a display control method according to an embodiment of this application. As shown in FIG. 12, the method includes the following steps.

S1201: An electronic device may display a first interface in full screen by using a foldable display.

For example, the first interface may be the gallery application interface 410 shown in FIG. 4, but is not limited thereto, or may be another interface (for example, a home screen). For specific content, refer to the foregoing embodiment. Details are not described herein again.

S1202: The electronic device may receive a first folding operation for the foldable display.

A display area of the foldable display is divided into a primary display, a secondary display, and a side display. The first folding operation may be the folding operation 411 shown in FIG. 4 above. For specific content, refer to the foregoing embodiment. Details are not described herein again.

S1203: In response to the first folding operation, the electronic device displays a second interface on the primary display or the secondary display of the foldable display, and displays a beautified layer on the side display of the foldable display. A pattern is displayed at the beautified layer, and interface content of the second interface is the same as interface content of the first interface.

The interface content of the second interface and the interface content of the first interface are the same, but display ratios are different.

For example, the second interface displayed by the electronic device on the primary display of the foldable display may be the gallery application interface 510 in FIG. 5A. The one or more album entries included in the gallery application interface 510 shown in FIG. 5A are the same as the one or more album entries included in the gallery application interface 410 shown in FIG. 4.

The beautified layer displayed on the side display of the gallery application interface 510 may be the beautified layer 520 shown in FIG. 5A or FIG. 5B. The pattern at the beautified layer 520 is merely an example, and is not limited thereto, and may also be a pattern of another style. For specific content, refer to the foregoing embodiment. Details are not described herein again.

In a possible implementation, the electronic device may receive a first input operation for the beautified layer on the side display. In response to the first input operation, the electronic device may switch between patterns displayed at the beautified layer. For example, the first input operation may be the input operation 922 (for example, sliding from top to bottom) in FIG. 9A. In response to the input operation 922, the electronic device may switch from the pattern 921 that is shown in FIG. 9A and that is displayed at the beautified layer 920 on the side display to the pattern 923 shown in FIG. 9B. In this way, the user can conveniently change the pattern at the beautified layer on the side display. This improves user experience. For specific content, refer to the foregoing embodiment. Details are not described herein again.

In a possible implementation, the electronic device may receive a second input operation for the beautified layer on the side display. In response to the second input operation, the electronic device may cancel displaying the beautified layer on the side display. For example, the second input operation may be the input operation 924 (for example, double-tapping) shown in FIG. 9B for the beautified layer 920. In response to the input operation 924, the electronic device may cancel displaying the beautified layer on the side display of the foldable display. For specific content, refer to the foregoing embodiment. Details are not described herein again. In this way, the electronic device can receive a user input based on a user requirement, and cancel displaying the beautified layer on the side display of the foldable display. This improves user experience.

In a possible implementation, after the electronic device cancels displaying the beautified layer on the side display, the electronic device may receive a third input operation for the side display. In response to the third input operation, the electronic device may display the beautified layer on the side display. For example, the third input operation may be the input operation 926 (for example, double-tapping) shown in FIG. 9C for the side display. In response to the input operation 926, the electronic device may display the beautified layer shown in FIG. 9D on the side display. In this way, after the electronic device cancels displaying the beautified layer on the side display, the electronic device can receive a user input based on a user requirement, and display the beautified layer on the side display again. This improves user experience.

In a possible implementation, the electronic device may receive a first unfolding operation for the foldable display. In response to the first unfolding operation, the electronic device extends, within a first time period, the second interface to the first interface that is displayed on the foldable display in full screen, and the electronic device slides, within the first time period, the beautified layer out of the display area of the foldable display along a direction in which the second interface is extended. For example, the first unfolding operation may be the unfolding operation 511 shown in FIG. 5A or FIG. 5B. In response to the unfolding operation 511, within the first time period (for example, within 0.5s), the electronic device may slide the beautified layer displayed on the side display out along a side direction in which the secondary display is located, and the application interface displayed on the primary display synchronously extends along a direction in which the beautified layer slides, until the foldable display displays the application interface in full screen. For specific content, refer to the foregoing embodiment shown in FIG. 6A, FIG. 6B, and FIG. 6C. Details are not described herein again. In this way, progressive exit of the beautified layer displayed in a bent area can be implemented, and continuous change of the application interface from primary-display display to full-screen display can be implemented. This avoids bringing a skipping visual sense to the user when the application interface is extended to the full screen, and improves visual experience of the user.

In accordance with the claimed invention, the electronic device receives a second unfolding operation for the foldable display. In response to the second unfolding operation, the electronic device extends, within a second time period, the second interface to the first interface that is displayed on the foldable display in full screen, and the electronic device slides, within the first time period, the beautified layer out of the display area of the foldable display along a direction perpendicular to a direction in which the second interface is extended. For example, the first unfolding operation may be the unfolding operation 511 shown in FIG. 5A or FIG. 5B. In a possible implementation not covered by the claimed invention, in response to the unfolding operation 511, within the second time period (for example, within 0.5s), the electronic device may slide the beautified layer displayed on the side display out along the bottom direction or the top direction of the bent area. At the same time, the electronic device may extend the application interface displayed on the primary display along the secondary display direction until the application interface is displayed on the foldable display in full screen. For specific content, refer to the foregoing embodiment shown in FIG. 7A, FIG. 7B, and FIG. 7C. Details are not described herein again. In this way, progressive exit of the beautified layer displayed in the bent area can be implemented, and continuous change of the application interface from primary-display display to full-screen display can be implemented. This avoids bringing a skipping visual sense to the user when the application interface is extended to the full screen, and improves visual experience of the user.

In a possible implementation, the electronic device may determine whether the primary display of the foldable display faces upward relative to a horizontal plane, and if yes, the electronic device displays the second interface on the primary display of the foldable display, or if no, the electronic device displays the second interface on the secondary display of the foldable display. For example, when the primary display of the foldable display faces upward relative to the ground, the electronic device 100 may display, on the primary display, interface content output by a display system. When the secondary display of the foldable display faces upward relative to the ground, the electronic device 100 may display, on the secondary display, the interface content output by the display system. In this way, when the foldable display is switched from the unfolded form to the folded form, the user can view interface content output by a display system of the electronic device in the first time.

In this embodiment of this application, when the foldable display is in the unfolded state, the electronic device may display an interface (for example, a home screen or the application interface) on the foldable display in full screen. When the foldable display is switched from the unfolded state to the folded state, the electronic device may display, by scaling down the interface on the primary display or the secondary display, the interface that is displayed in full screen when the foldable display is in the unfolded state, or display, on both the primary display and the secondary display, interface content whose interface is scaled down. In addition, the electronic device displays the beautified layer on the side display of the foldable display, and the beautified layer may display the pattern (for example, a spine pattern). Because the beautified layer with the pattern (for example, a spine-type pattern) is displayed on the side display, visual experience of a user is increased.

The foregoing embodiments are merely intended to describe the technical solutions of this application, but not to limit this application.

## Claims

1. A display control method, applied to an electronic device (100) configured with a foldable display, wherein the method comprises:
displaying (S1201), by the electronic device (100), a first interface (630, 730) in full screen by using the foldable display;
receiving (S1202), by the electronic device (100), a first folding operation for the foldable display, wherein a display area of the foldable display is divided into a primary display, a secondary display, and a side display; and
in response to the first folding operation, displaying (S1203), by the electronic device (100), a second interface (610, 710) on the primary display or the secondary display of the foldable display, and displaying a beautified layer (620, 720) on the side display of the foldable display, wherein a pattern is displayed at the beautified layer (620, 720), and interface content of the second interface (610, 710) is the same as interface content of the first interface (630, 730),
wherein the method further comprises:
receiving, by the electronic device (100), a second unfolding operation for the foldable display; and, in response to the second unfolding operation, extending, by the electronic device (100) within a second time period, the second interface (710) to the first interface (730) that is displayed on the foldable display in full screen, and sliding, by the electronic device (100) within a first time period, the beautified layer (720) out of the display area of the foldable display along a direction perpendicular to a direction in which the second interface (710) is extended,
wherein, in response to the second unfolding operation, progressive exit of the beautified layer displayed in the bent area is implemented, and continuous change of the second interface (710) from primary-display display to full-screen display is also implemented so that the beautified layer (720) of the side display slides in a direction from a top to a bottom of the side display and synchronously the second interface (710) also extends along the direction in which the secondary display is located.

2. The method according to claim 1, wherein the method further comprises:
receiving, by the electronic device (100), a first input operation for the beautified layer (620, 720) on the side display; and
in response to the first input operation, switching, by the electronic device (100), between patterns displayed at the beautified layer (620, 720).

3. The method according to claim 1, wherein the method further comprises:
receiving, by the electronic device (100), a second input operation for the beautified layer (620, 720) on the side display; and
in response to the second input operation, canceling displaying, by the electronic device (100), the beautified layer (620, 720) on the side display.

4. The method according to claim 3, wherein after the canceling displaying, by the electronic device (100), the beautified layer (620, 720) on the side display, the method further comprises:
receiving, by the electronic device (100), a third input operation for the side display; and
in response to the third input operation, displaying, by the electronic device (100), the beautified layer (620, 720) on the side display.

5. The method according to any one of claims 1 to 4, wherein the first time period is 0.5 s.

6. The method according to any one of claims 1 to 5, wherein the second time period is 0.5 s.

7. The method according to claim 1, wherein the displaying, by the electronic device (100), the second interface (610, 710) on the primary display or the secondary display of the foldable display comprises:
determining, by the electronic device (100), whether the primary display of the foldable display faces upward relative to a horizontal plane, and if the primary display of the foldable display faces upward relative to a horizontal plane, displaying, by the electronic device (100), the second interface (610, 710) on the primary display of the foldable display, or if the primary display of the foldable display does not face upward relative to a horizontal plane, displaying, by the electronic device (100), the second interface (610, 710) on the secondary display of the foldable display.

8. An electronic device (100), comprising one or more memories, a foldable display, and one or more processors (110), wherein the one or more memories are coupled to the one or more processors (100), the foldable display communicates with the one or more processors (100), and the one or more memories are configured to store computer program code, wherein the program code comprises computer instructions, and when the one or more processors (100) execute the computer instructions, cause the electronic device (100) to carry out the display control method according to any one of claims 1 to 7.

9. A computer storage medium comprising instructions which, when executed by a computer, cause the computer to carry out the display control method according to any one of claims 1 to 7.

10. A computer program product comprising instructions which, when executed by a computer, cause the computer to carry out the display control method according to any one of claims 1 to 7.

## Patentansprüche

1. Anzeigesteuerungsverfahren, angewendet auf eine elektronische Vorrichtung (100), die mit einer faltbaren Anzeige konfiguriert ist, wobei das Verfahren Folgendes umfasst:
Anzeigen (S1201) einer ersten Schnittstelle (630, 730) im Vollbild durch die elektronische Vorrichtung (100) unter Verwendung der faltbaren Anzeige;
Empfangen (S1202) eines ersten Faltvorgangs für die faltbare Anzeige durch die elektronische Vorrichtung (100), wobei ein Anzeigebereich der faltbaren Anzeige in eine Primäranzeige, eine Sekundäranzeige und eine Seitenanzeige unterteilt ist; und
als Reaktion auf den ersten Faltvorgang, Anzeigen (S1203) einer zweiten Schnittstelle (610, 710) auf der Primäranzeige oder der Sekundäranzeige der faltbaren Anzeige durch die elektronische Vorrichtung (100) und Anzeigen einer verschönerten Schicht (620, 720) auf der Seitenanzeige der faltbaren Anzeige, wobei ein Muster auf der verschönerten Schicht (620, 720) angezeigt wird und ein Schnittstelleninhalt der zweiten Schnittstelle (610, 710) gleich einem Schnittstelleninhalt der ersten Schnittstelle (630, 730) ist,
wobei das Verfahren ferner Folgendes umfasst:
Empfangen eines zweiten Entfaltvorgangs für die faltbare Anzeige durch die elektronische Vorrichtung (100); und, als Reaktion auf den zweiten Entfaltvorgang, Erweitern der zweiten Schnittstelle (710) auf die erste Schnittstelle (730), die auf der faltbaren Anzeige im Vollbild angezeigt wird, durch die elektronische Vorrichtung (100) innerhalb eines zweiten Zeitraums und Verschieben der verschönerten Schicht (720) aus dem Anzeigebereich der faltbaren Anzeige entlang einer Richtung senkrecht zu einer Richtung, in der die zweite Schnittstelle (710) verlängert ist, durch die elektronische Vorrichtung (100) innerhalb eines ersten Zeitraums,
wobei als Reaktion auf den zweiten Entfaltvorgang ein stufenweises Verschwinden der in dem gebogenen Bereich angezeigten verschönerten Schicht umgesetzt wird und außerdem ein kontinuierliches Wechseln der zweiten Schnittstelle (710) von der Primäranzeige zur Vollbildanzeige umgesetzt wird,
sodass die verschönerte Schicht (720) der Seitenanzeige in einer Richtung von oben nach unten der Seitenanzeige gleitet und sich die zweite Schnittstelle (710) ebenfalls synchron entlang der Richtung erstreckt, in der sich die Sekundäranzeige befindet.

2. Verfahren nach Anspruch 1, wobei das Verfahren ferner Folgendes umfasst:
Empfangen eines ersten Eingabevorgangs für die verschönerte Schicht (620, 720) auf der Seitenanzeige durch die elektronische Vorrichtung (100); und
als Reaktion auf den ersten Eingabevorgang, Umschalten zwischen Mustern, die auf der verschönerten Schicht (620, 720) angezeigt werden, durch die elektronische Vorrichtung (100).

3. Verfahren nach Anspruch 1, wobei das Verfahren ferner Folgendes umfasst:
Empfangen eines zweiten Eingabevorgangs für die verschönerte Schicht (620, 720) auf der Seitenanzeige durch die elektronische Vorrichtung (100); und
als Reaktion auf den zweiten Eingabevorgang, Abbrechen der Anzeige der verschönerten Schicht (620, 720) auf der Seitenanzeige durch die elektronische Vorrichtung (100).

4. Verfahren nach Anspruch 3, wobei nach dem Abbrechen der Anzeige der verschönerten Schicht (620, 720) auf der Seitenanzeige durch die elektronische Vorrichtung (100) das Verfahren ferner Folgendes umfasst:
Empfangen eines dritten Eingabevorgangs für die Seitenanzeige durch die elektronische Vorrichtung (100); und
als Reaktion auf den dritten Eingabevorgang, Anzeigen der verschönerten Schicht (620, 720) auf der Seitenanzeige durch die elektronische Vorrichtung (100).

5. Verfahren nach einem der Ansprüche 1 bis 4, wobei der erste Zeitraum 0,5 Sek. beträgt.

6. Verfahren nach einem der Ansprüche 1 bis 5, wobei der zweite Zeitraum 0,5 Sek. beträgt.

7. Verfahren nach Anspruch 1, wobei das Anzeigen der zweiten Schnittstelle (610, 710) durch die elektronische Vorrichtung (100) auf der Primäranzeige oder der Sekundäranzeige der faltbaren Anzeige Folgendes umfasst:
Bestimmen, durch die elektronische Vorrichtung (100), ob die Primäranzeige der faltbaren Anzeige relativ zu einer horizontalen Ebene nach oben weist, und, wenn die Primäranzeige der faltbaren Anzeige relativ zu einer horizontalen Ebene nach oben weist, Anzeigen der zweiten Schnittstelle (610, 710) auf der Primäranzeige der faltbaren Anzeige durch die elektronische Vorrichtung (100), oder, wenn die Primäranzeige der faltbaren Anzeige relativ zu einer horizontalen Ebene nicht nach oben weist, Anzeigen der zweiten Schnittstelle (610, 710) auf der Sekundäranzeige der faltbaren Anzeige durch die elektronische Vorrichtung (100).

8. Elektronische Vorrichtung (100), die einen oder mehrere Speicher, eine faltbare Anzeige und einen oder mehrere Prozessoren (110) umfasst, wobei der eine oder die mehreren Speicher mit dem einen oder den mehreren Prozessoren (100) gekoppelt sind, die faltbare Anzeige mit dem einen oder den mehreren Prozessoren (100) kommuniziert und der eine oder die mehreren Speicher dazu konfiguriert sind, Computerprogrammcode zu speichern, wobei der Programmcode Computeranweisungen umfasst, und, wenn der eine oder die mehreren Prozessoren (100) die Computeranweisungen ausführen, die elektronische Vorrichtung (100) dazu veranlasst wird, das Anzeigesteuerungsverfahren nach einem der Ansprüche 1 bis 7 durchzuführen.

9. Computerspeichermedium, umfassend Anweisungen, die bei Ausführung durch einen Computer bewirken, dass der Computer das Anzeigesteuerungsverfahren nach einem der Ansprüche 1 bis 7 durchführt.

10. Computerprogrammprodukt, umfassend Anweisungen, die bei Ausführung durch einen Computer bewirken, dass der Computer das Anzeigesteuerungsverfahren nach einem der Ansprüche 1 bis 7 durchführt.

## Revendications

1. Procédé de commande d'affichage, appliqué à un dispositif électronique (100) configuré avec un affichage pliable, dans lequel le procédé comprend :
l'affichage (S1201), par le dispositif électronique (100), d'une première interface (630, 730) en plein écran à l'aide de l'affichage pliable ;
la réception (S1202), par le dispositif électronique (100), d'une première opération de pliage pour l'affichage pliable, dans lequel une zone d'affichage de l'affichage pliable est divisée en un affichage primaire, un affichage secondaire et un affichage latéral ; et
en réponse à la première opération de pliage, l'affichage (S1203), par le dispositif électronique (100), d'une seconde interface (610, 710) sur l'affichage primaire ou l'affichage secondaire de l'affichage pliable, et l'affichage d'une couche embellie (620, 720) sur l'affichage latéral de l'affichage pliable, dans lequel un motif est affiché au niveau de la couche embellie (620, 720), et le contenu d'interface de la seconde interface (610, 710) est le même que le contenu d'interface de la première interface (630, 730),
dans lequel le procédé comprend également :
la réception, par le dispositif électronique (100), d'une seconde opération de dépliage pour l'affichage pliable ; et, en réponse à la seconde opération de dépliage, le prolongement, par le dispositif électronique (100) dans une seconde période de temps, de la seconde interface (710) à la première interface (730) qui est affichée sur l'affichage pliable en plein écran, et le coulissement, par le dispositif électronique (100) dans une première période de temps, de la couche embellie (720) hors de la zone d'affichage de l'affichage pliable le long d'une direction perpendiculaire à une direction dans laquelle la seconde interface (710) est prolongée,
dans lequel, en réponse à la seconde opération de dépliage, une sortie progressive de la couche embellie affichée dans la zone courbée est mise en œuvre, et un changement continu de la seconde interface (710) d'un affichage d'affichage primaire à un affichage plein écran est également mis en œuvre de telle sorte que la couche embellie (720) de l'affichage latéral coulisse dans une direction d'un haut vers un bas de l'affichage latéral et de manière synchrone la seconde interface (710) se prolonge également le long de la direction dans laquelle se trouve l'affichage secondaire.

2. Procédé selon la revendication 1, dans lequel le procédé comprend également :
la réception, par le dispositif électronique (100), d'une première opération d'entrée de la couche embellie (620, 720) sur l'affichage latéral ; et
en réponse à la première opération d'entrée, la commutation, par le dispositif électronique (100), entre des motifs affichés au niveau de la couche embellie (620, 720).

3. Procédé selon la revendication 1, dans lequel le procédé comprend également :
la réception, par le dispositif électronique (100), d'une deuxième opération d'entrée de la couche embellie (620, 720) sur l'affichage latéral ; et
en réponse à la deuxième opération d'entrée, l'annulation de l'affichage, par le dispositif électronique (100), de la couche embellie (620, 720) sur l'affichage latéral.

4. Procédé selon la revendication 3, dans lequel après l'annulation de l'affichage, par le dispositif électronique (100), de la couche embellie (620, 720) sur l'affichage latéral, le procédé comprend également :
la réception, par le dispositif électronique (100), d'une troisième opération d'entrée de l'affichage latéral ; et
en réponse à la troisième opération d'entrée, l'affichage, par le dispositif électronique (100), de la couche embellie (620, 720) sur l'affichage latéral.

5. Procédé selon l'une quelconque des revendications 1 à 4, dans lequel la première période de temps est de 0,5 **s.**

6. Procédé selon l'une quelconque des revendications 1 à 5, dans lequel la seconde période de temps est de 0,5 s.

7. Procédé selon la revendication 1, dans lequel l'affichage, par le dispositif électronique (100), de la seconde interface (610, 710) sur l'affichage primaire ou l'affichage secondaire de l'affichage pliable comprend :
le fait de déterminer, par le dispositif électronique (100), si l'affichage primaire de l'affichage pliable est orienté vers le haut par rapport à un plan horizontal, et si l'affichage primaire de l'affichage pliable est orienté vers le haut par rapport à un plan horizontal, l'affichage, par le dispositif électronique (100), de la seconde interface (610, 710) sur l'affichage primaire de l'affichage pliable, ou, si l'affichage primaire de l'affichage pliable n'est pas orienté vers le haut par rapport à un plan horizontal, l'affichage, par le dispositif électronique (100), de la seconde interface (610, 710) sur l'affichage secondaire de l'affichage pliable.

8. Dispositif électronique (100), comprenant une ou plusieurs mémoires, un affichage pliable et un ou plusieurs processeurs (110), dans lequel les une ou plusieurs mémoires sont couplées aux un ou plusieurs processeurs (100), l'affichage pliable communique avec les un ou plusieurs processeurs (100), et les une ou plusieurs mémoires sont configurées pour stocker un code de programme informatique, dans lequel le code de programme comprend des instructions informatiques, et lorsque les un ou plusieurs processeurs (100) exécutent les instructions informatiques, amènent le dispositif électronique (100) à mettre en œuvre le procédé de commande d'affichage selon l'une quelconque des revendications 1 à 7.

9. Support de stockage informatique comprenant des instructions qui, lorsqu'elles sont exécutées par un ordinateur, amènent l'ordinateur à mettre en œuvre le procédé de commande d'affichage selon l'une quelconque des revendications 1 à 7.

10. Produit de programme informatique comprenant des instructions qui, lorsqu'elles sont exécutées par un ordinateur, amènent l'ordinateur à mettre en œuvre le procédé de commande d'affichage selon l'une quelconque des revendications 1 à 7.
